# EUROPEAN PATENT APPLICATION

(11) **EP 4 841 627 A1**
(43) Date of publication of application: **18.11.2026**
(21) Application number: 26177515.9
(22) Date of filing: 08.05.2026
(51) Int. Cl.: G10L 17/06, G06F 40/58, G10L 15/26, G10L 17/04

(54) **IDENTITY-BASED SPEAKER TARGETING FOR AUTOMATIC SPEECH TRANSLATION SYSTEMS AND APPLICATIONS**

(30) Priority: 12.05.2025 US 202519205716
(71) Applicant: Nvidia Corporation, Santa Clara, CA 95051 (US)
(72) Inventor: DUBEY, Harishchandra, Santa Clara, CA, 95051 (US); KIM, Myungjong, Santa Clara, CA, 95051 (US); OLABIYI, Oluwatobi, Santa Clara, CA, 95051 (US); VAIDYA, Utkarsh, Santa Clara, CA, 95051 (US); LONG, Eileen Margaret Peters, Santa Clara, CA, 95051 (US)
(74) Representative: Kraus & Lederer PartGmbB

(57) **Abstract**

In various examples, AI-based techniques may be used to translate speech of specific speakers in multi-speaker environments. For example, the systems and methods of the present disclosure may integrate target speaker extraction with automatic speech translation (AST) into a single AST model. Based on this integration, the AST model may be used to extract the speech of a specified speaker from mixed audio and directly translate the speech into text of a target language without intermediate transcription. For instance, the AST model may receive a speech sample for the speaker and use the sample to identify and extract the target speaker's voice from a dialogue. The AST model may then process the extracted speech and generate a direct translation without requiring separate automatic speech recognition (ASR) and machine translation (MT) stages.

## Description

### BACKGROUND

Speech translation systems may be used to convert speech from one language into text or speech in a different language. For example, a speech translation system may be used to translate German speech into English text or English speech (e.g., via speech synthesis). Conventional speech translation systems typically rely on a pipeline consisting of automatic speech recognition (ASR) and machine translation (MT). In these conventional systems, ASR may be used to convert speech into text in the same language, and MT may then translate that converted text into the target language. While effective, this two-step process may introduce latency and accumulate errors between stages. For example, MT may use large language models (LLM) in the generation of translated text, which can produce errors via hallucinations. LLM-dependent MT may therefore not be suitable for real-time streaming use-cases. Recent advancements in speech translation may integrate ASR and MT into end-to-end Automatic Speech Translation (AST) models, which may improve latency and accuracy by eliminating error propagation between separate components.

However, conventional AST models and systems generally translate all spoken content in a given audio stream. This may be less effective in scenarios where only voices of specific speakers need to be translated. Additionally, while some conventional AST models may integrate large language models (LLMs) with speech encoders to help improve translation performance, these methods may have limitations, including susceptibility to errors in speaker separation, reliance on multiple sub-systems, and the potential for hallucinations in LLM-based approaches. Furthermore, conventional AST systems may not generalize well to multiple speakers without requiring additional system components.

### SUMMARY

Embodiments of the present disclosure relate to identity-based speaker targeting for automatic speech translation systems and applications. Systems and methods are disclosed that may integrate target speaker (TS) extraction with automatic speech translation (AST) into a single AST model, which may be used to extract the speech of a specified speaker(s) from mixed audio (e.g., multi-speaker dialogue) and directly translate the speech into text or speech in a target language(s) - e.g., without requiring intermediate transcription or diarization. For instance, the AST model may receive a speech sample for a speaker and use the speech sample to identify and extract a portion of the audio corresponding to the target speaker's voice from a dialogue. The AST model may then process the extracted speech (e.g., audio data representative thereof, or a representation of the audio data, such as in the form of a spectrogram) and generate a direct translation without requiring separate, sequential automatic speech recognition (ASR) and machine translation (MT) stages. As described herein, in some examples, the AST model may include a speaker encoder that processes speech samples to create voice profiles (e.g., speaker embeddings) associated with speakers, a TS-AST encoder that extracts and encodes the speech of the target speakers from mixed audio, and/or a TS-AST decoder that uses the encoded speech to directly generate translated text or speech in the target language. In embodiments where speech is generated as an output, the TS-AST model may perform the speech synthesis to generate output speech, or the translated text may be processed by a speech synthesis model to generate synthesized speech corresponding to the translated text (in a voice profile that matches the translated speaker, in embodiments).

In contrast to conventional systems, the systems of the present disclosure, in some embodiments, are able to integrate target speaker (TS) extraction with automatic speech translation (AST) into a unified model, thereby eliminating the need for discrete speech separation, automatic speech recognition (ASR), and machine translation (MT) stages. By directly processing mixed audio to extract and translate the speech of a specified speaker, the disclosed systems and methods may reduce latency and minimize error propagation inherent in multi-stage pipelines. Additionally, the incorporation of a speaker encoder for identity-based speaker targeting enhances accuracy by ensuring that only the designated speaker's voice is translated, even in complex multi-speaker environments. The disclosed approaches further improve adaptability by supporting various AST configurations, including any-to-any language translation, without requiring extensive system modifications.

### BRIEF DESCRIPTION OF THE DRAWINGS

The present systems and methods for identity-based speaker targeting for automatic speech translation systems and applications are described in detail below with reference to the attached drawing figures, wherein:
FIG. 1A is a data flow diagram illustrating an example of a process for target speaker automatic speech translation (TS-AST), in accordance with some embodiments of the present disclosure;
FIG. 1B is a data flow diagram illustrating another example of a process for TS-AST, in accordance with some embodiments of the present disclosure;
FIG. 2A illustrates an example of using a single TS-AST model multiple times to translate speech from a plurality of speakers associated with a multi-speaker dialogue, in accordance with some embodiments of the present disclosure;
FIG. 2B illustrates an example of using multiple TS-AST models to translate speech from a plurality of speakers associated with a multi-speaker dialogue, in accordance with some embodiments of the present disclosure;
FIG. 3 is a data flow diagram illustrating an example of training one or more TS-AST models, in accordance with some embodiments of the present disclosure;
FIG. 4 is a block diagram illustrating an example of a system that may perform one or more of the processes and methods described herein, in accordance with some embodiments of the present disclosure;
FIG. 5 is a flow diagram illustrating an example of a method for using one or more TS-AST models to translate speech, in accordance with some embodiments of the present disclosure;
FIG. 6 is a flow diagram illustrating an example of a method for translating speech of a target speaker and performing operations using the translation, in accordance with some embodiments of the present disclosure;
FIG. 7 is a block diagram of an example computing device suitable for use in implementing some embodiments of the present disclosure;
FIG. 8 is a block diagram of an example data center suitable for use in implementing some embodiments of the present disclosure;
FIG. 9A is a block diagram of an example generative language model system suitable for use in implementing at least some embodiments of the present disclosure;
FIG. 9B is a block diagram of an example generative language model that includes a transformer encoder-decoder suitable for use in implementing at least some embodiments of the present disclosure; and
FIG. 9C is a block diagram of an example generative language model that includes a decoder-only transformer architecture suitable for use in implementing at least some embodiments of the present disclosure.

### DETAILED DESCRIPTION

Systems and methods are disclosed related to identity-based speaker targeting for automatic speech translation systems and applications. For instance, in many applications-such as online video conferencing, video meetings, live transcription, voice dialogue systems, gaming, Large Language Model (LLM) front-ends, etc.-it may be desirable to transcribe the speech of a target speaker to a different language than what is spoken. In such scenarios, the focus of an AST system should be to convert the words spoken by the target speaker to text and/or speech in the target language(s). As such, the disclosed systems and methods may integrate target speaker (TS) identification with automatic speech translation (AST) into a single model (referred to herein as a "TS-AST model"), and the TS-AST model may be used to translate the speech of target speaker from mixed audio (e.g., multi-speaker dialogue) into text and/or speech of the target language - e.g., without requiring intermediate transcription.

For instance, a system(s) may train and/or use one or more TS-AST models to process audio data representing a multi-speaker dialogue (e.g., conversation, speeches, exchange, meeting, etc.) and generate text and/or speech representing one or more translations or diarizations of one or more utterances spoken by one or more target speakers participating in the multi-speaker dialogue. Take, for example, a business meeting where three individuals-Speaker A, Speaker B, and Speaker C-are engaged in a discussion in German. If a remote participant only requires a translation of Speaker A's speech into English while disregarding the speech of Speaker B and Speaker C, the system(s) may use the TS-AST model(s) to identify Speaker A's voice from the mixed audio, isolate their speech, and directly generate a translated transcript in English (and/or generate a speech output corresponding to the translated transcript). That is, the system(s) may use the TS-AST model(s) to perform end-to-end processing and deliver an accurate and efficient translation of the utterance(s) spoken by Speaker A. Similarly, where Speaker A speaks German while Speaker B and Speaker C speak English, the German speech of Speaker A may be translated and output (as text and/or speech) in order to provide English outputs from all three speakers (A, B, and C).

In some examples, the TS-AST model may include a speaker encoder. The speaker encoder may be configured to generate or obtain voice profiles from enrollment audio corresponding to a target speaker. The voice profiles may allow the system(s) to focus on the speech of the target speaker while filtering out other voices in a multi-speaker environment. For instance, the system(s) may, in some examples, receive audio data representing a speech sample for a target speaker. The speech sample may be applied to the speaker encoder and the speaker encoder may generate a voice profile for the target speaker (e.g., as an embedding in a multi-dimensional embedding space). The voice profile may, in some instances, include speaker embeddings (e.g., vector embeddings) associated with the target speaker in a multi-dimensional embedding space. In some examples, the speaker embeddings may characterize (e.g., represent as a feature vector) the target speaker's unique vocal features. For instance, the speaker embeddings may include fixed-length numerical representations of a speaker's voice that capture and indicate unique vocal characteristics of the speaker.

In some instances, the TS-AST model may include a TS-AST encoder. The TS-AST encoder may be configured to use the voice profiles (e.g., speaker embeddings) from the speaker encoder to identify utterances spoken by a target user during a multi-speaker dialogue. For instance, the system(s) may receive input audio data representing the multi-speaker dialogue and apply the input audio data to the TS-AST encoder of the TS-AST model. The TS-AST encoder may then process the input audio data and use the voice profiles to extract features corresponding to the target speaker's voice while suppressing or disregarding speech from non-target speakers. The extracted features may be transformed into encoded representations that preserve both the linguistic and speaker identity information necessary for accurate translation. The TS-AST encoder may be implemented using neural network architectures, Transformer-based models, and/or other architectures, such as but not limited to those described herein. The encoded representations of the target speaker's speech may be provided to a TS-AST decoder for translation into the target language.

In some examples, the TS-AST model may include a TS-AST decoder. The TS-AST decoder may be configured to receive and process the encodings from the TS-AST encoder and generate text representing the translated utterances of the target speaker in the target language. For instance, the TS-AST decoder may receive, as inputs, the encodings form the TS-AST encoder and an indication of the target language. The TS-AST decoder may then process the inputs to generate the output text representing the translation of the target speaker's speech. In some instances, the decoder may use various architectures, including connectionist temporal classification (CTC), recurrent neural network transducers (RNN-T), hybrid CTC/RNN-T, Transformer decoders, and/or any other architectures or encoder models capable of converting the encoded representations into a structured text and/or speech output.

In some instances, the system(s) may use one or more language identification systems to determine one or more source languages of the input speech. For instance, when processing audio from a multi-speaker dialogue, the system(s) may first analyze the speech to identify the language being spoken by the target speaker. This identification step may ensure that the TS-AST model correctly interprets the linguistic characteristics of the input before generating a translation. In some examples, the language identification system(s) may function as a preprocessing step that enables the TS-AST decoder to adapt to different source languages dynamically. For instance, in any-to-any translation scenarios where the input speech may be in any language from a supported set, the TS-AST decoder may need to be aware of both the source and target languages to produce accurate translations. By using the language identification system(s) to determine the source language, the system(s) may enable the TS-AST decoder to select appropriate translation rules, vocabulary, and/or sentence structures, reducing errors that may arise from misinterpretation of the input.

As described herein, in some examples, the system(s) may extend the TS-AST model to support multi-speaker automatic speech translation (multi-speaker AST) during inference. That is, instead of limiting translation to a single target speaker, the system(s) may allow multiple speakers in a conversation to be processed individually while maintaining the same model architecture. For instance, after training the TS-AST model, the system(s) may reuse the same trained model weights to perform multiple inferences for a plurality (e.g., each) of speakers in the dialogue. By providing enrollment speech for Speaker A, the model may generate a translated transcript for Speaker A while disregarding speech from others. Similarly, the same model (or an instance(s) of the model) may be used with enrollment speech from Speaker B, Speaker C, and so forth to produce separate translated outputs for one or more (e.g., each) of these speakers. For example, the TS-AST model may include N output channels to support N speaker translated text and/or speech outputs. In various instances, this approach may enable multi-speaker AST without modifying the trained model, as each speaker may be treated as a separate target speaker during inference.

In some examples, the various models (e.g., TS-AST models, deep neural networks, language models, LLMs, VLMs, multi-modal language models, vision-language-action (VLA) models, perception models, tracking models, fusion models, transformer models, diffusion models, encoder-only models, decoder-only models, encoder-decoder models, neural rendering field (NERF) models, etc.) described herein may be packaged as a microservice - such an inference microservice (e.g., NVIDIA NIMs) - which may include a container (e.g., an operating system (OS)-level virtualization package) that may include an application programming interface (API) layer, a server layer, a runtime layer, and/or a model "engine." For example, the inference microservice may include the container itself and the model(s) (e.g., weights and biases). In some instances, such as where the model(s) is small enough (e.g., has a small enough number of parameters), the model(s) may be included within the container itself. In other examples - such as where the model(s) is large - the model(s) may be hosted/stored in the cloud (e.g., in a data center) and/or may be hosted on-premises and/or at the edge (e.g., on a local server or computing device, but outside of the container). In such embodiments, the model(s) may be accessible via one or more APIs - such as REST APIs. As such, and in some embodiments, the model(s) described herein may be deployed as an inference microservice to accelerate deployment of a model(s) on any cloud, data center, or edge computing system, while ensuring the data is secure. For example, the inference microservice may include one or more APIs, a pre-configured container for simplified deployment, an optimized inference engine (e.g., built using a standardized AI model deployment an execution software, such as NVIDIA's Triton Inference Server, and/or one or more APIs for high performance deep learning inference, which may include an inference runtime and model optimizations that deliver low latency and high throughput for production applications - such as NVIDIA's TensorRT), and/or enterprise management data for telemetry (e.g., including identity, metrics, health checks, and/or monitoring). The model(s) described herein may be included as part of the microservice along with an accelerated infrastructure with the ability to deploy with a single command and/or orchestrate and auto-scale with a container orchestration system on accelerated infrastructure (e.g., on a single device up to data center scale). As such, the inference microservice may include the model(s) (e.g., that has been optimized for high performance inference), an inference runtime software to execute the model(s) and provide outputs/responses to inputs (e.g., user queries, prompts, etc.), and enterprise management software to provide health checks, identity, and/or other monitoring. In some embodiments, the inference microservice may include software to perform in-place replacement and/or updating to the model(s). When replacing or updating, the software that performs the replacement/updating may maintain user configurations of the inference runtime software and enterprise management software.

The systems and methods described herein may be used by, without limitation, non-autonomous vehicles or machines, semi-autonomous vehicles or machines (e.g., in one or more adaptive driver assistance systems (ADAS)), autonomous vehicles or machines, piloted and un-piloted robots or robotic platforms, warehouse vehicles, off-road vehicles, vehicles coupled to one or more trailers, flying vessels, boats, shuttles, emergency response vehicles, motorcycles, electric or motorized bicycles, aircraft, construction vehicles, underwater craft, drones, and/or other vehicle types. Further, the systems and methods described herein may be used for a variety of purposes, by way of example and without limitation, for machine control, machine locomotion, machine driving, synthetic data generation, model training, perception, augmented reality, virtual reality, mixed reality, robotics, security and surveillance, simulation and digital twinning, autonomous or semi-autonomous machine applications, deep learning, environment simulation, object or actor simulation and/or digital twinning, data center processing, conversational AI, light transport simulation (e.g., ray-tracing, path tracing, etc.), collaborative content creation for 3D assets, cloud computing and/or any other suitable applications.

Disclosed embodiments may be comprised in a variety of different systems such as automotive systems (e.g., a control system for an autonomous or semi-autonomous machine, a perception system for an autonomous or semi-autonomous machine), systems implemented using a robot, aerial systems, medial systems, boating systems, smart area monitoring systems, systems for performing deep learning operations, systems for performing simulation operations, systems for performing digital twin operations, systems implemented using an edge device, systems implementing language models, such as large language models (LLMs), vision language models (VLMs), and/or multi-modal language models, systems implementing one or more vision language models (VLMs), systems incorporating one or more virtual machines (VMs), systems for performing synthetic data generation operations, systems implemented at least partially in a data center, systems for performing conversational AI operations, systems for performing light transport simulation, systems for performing collaborative content creation for 3D assets, systems for performing generative AI operations, systems implemented at least partially using cloud computing resources, and/or other types of systems.

For instance, in some embodiments, the systems and methods described herein may be deployed in a talking or smart kiosk application. For example, a kiosk, tablet, smart display, or other device may include one or more onboard processors (e.g., CPUs, GPUs, deep learning accelerators, SoCs) and memory and/or storage (e.g., for storing the TS-AST model(s), etc.). In some embodiments, the kiosk/tablet/display may communicate (e.g., using one or more network interface cards (NICs) and/or data processing units (DPUs)) with one or more locally hosted servers/computing devices and/or with one or more remotely located servers/computing devices (e.g., in one or more data centers). In such examples, the kiosk may communicate with the model(s) (e.g., TS-AST model(s), language model, LLM, VLM, MMLM, diffusion model, transformer model, NeRF, DNN, etc.) hosted on the local and/or remote servers using one or more APIs - such as, without limitation, REST APIs. By communicating with the model(s), the kiosk may be able to perform real-time translation of a speaker's (e.g., a user) utterances, and send the translated text to downstream components or applications (e.g., a downstream agentic AI system).

Additionally, in one or more embodiments, the systems and methods described herein may be deployed in a gaming application. For example, a gaming console, PC, tablet, or other gaming device may include one or more onboard and/or remote processors (e.g., CPUs, GPUs, deep learning accelerators, SoCs) and memory and/or storage (e.g., for storing the game model, game assets, player data, the TS-AST model(s), etc.). These devices may use one or more machine learning models (e.g., diffusion models, transformer models, neural rendering field (NeRF) models, language models (e.g., LLMs, VLMs, MMLMs, etc.), DNNs, etc.) to enhance gameplay, generate real-time dynamic content, and personalize user experiences based on in-game behavior or pre-stored player profiles. In some embodiments, the system may be deployed in a cloud gaming environment (e.g., NVIDIA's GeFORCE NOW). In such cases, a client device (e.g., a smart display, tablet, or gaming controller) may be used to interact with the game, while the machine learning model(s) and/or visual rendering may occur on one or more remotely located servers/computing devices (e.g., in one or more data centers). The language model, AI processing, and rendering described herein may operate in the cloud, processing player inputs received from an end-user device(s) (e.g., based on controller, keyboard, mouse, joystick, AR/VR/MR/etc. inputs), generating appropriate in-game responses, rendering the content, and sending or transmitting the content to the end-user device(s). During receiving and/or sending the data to and from the end-user or edge device(s), one or more data processing units (DPUs) and/or network interface cards (NICs) may be used. In some examples, the gaming application may use the TS-AST model(s) to perform real-time translation of a speaker's (e.g., a user, gamer, etc.) utterances, and send the translated text to downstream components or applications, such as a downstream LLM-based game assistant or any other downstream application related to the gaming application.

In some embodiments, the systems and methods described herein may be deployed in a video conferencing application. For example, a video conferencing device, such as a dedicated conferencing unit, computer, tablet, and/or smartphone, may include one or more onboard processors (e.g., CPUs, GPUs, deep learning accelerators, SoCs) and memory and/or storage (e.g., for storing the TS-AST model(s), video, audio, or other communication-related data). The system may use the model(s) (e.g., TS-AST model(s), diffusion models, transformer models, neural rendering field (NeRF) models, language models (e.g., LLMs, VLMs, MMLMs, etc.)) to enhance video conferencing functionality, including real-time or near real-time transcription, diarization, language translation, automatic speech recognition (ASR), and/or background noise reduction. In one or more embodiments, the system may enable users to interact with the video conferencing platform using natural language inputs and in various supported languages. For example, users may issue voice commands in any language to schedule, join, or leave meetings, or to manage participants and screen sharing. During receiving and/or sending the data to and from the end-user or edge device(s), one or more data processing units (DPUs) and/or network interface cards (NICs) may be used. In some examples, the video conferencing application may use the TS-AST model(s) to perform real-time translation of a speaker's utterances, and store the translated text transcriptions.

In some embodiments, the systems and methods described herein may be deployed in a robotics application. For example, a robot or robotic system may include one or more onboard processors (e.g., CPUs, GPUs, hardware-based deep learning accelerators (DLAs), hardware-based programmable vision accelerators (PV As) - which may include one or more vector processing units (VPUs), direct memory access (DMA) systems, and/or pixel processing engines (PPEs), hardware-based optical flow accelerators (OFAs), SoCs, etc.) and memory and/or storage (e.g., for storing control algorithms, sensor data, and one or more machine learning models). The robotic system may use these processors to execute one or more machine learning models (e.g., TS-AST model(s), language models, vision language models (VLMs), large language models (LLMs), vision-language-action (VLA) models, multi-modal language models (MMLMs), etc.) that allow it to perform complex tasks autonomously or semi-autonomously, such as interacting with and/or manipulating static and/or dynamic objects, or navigating environments using sensors such as cameras, LiDAR, RADAR, ultrasonic sensors, and more. The system may use sensor fusion techniques to combine data from multiple sensors (e.g., cameras, infrared, LiDAR, RADAR, accelerometers) to create a comprehensive model of the robot's surroundings. This data may be processed locally on the robot or sent to remote servers for more computationally intensive tasks, such as 3D mapping or SLAM (Simultaneous Localization and Mapping). In one or more embodiments, data from individual robots (e.g., sensor data, task status, or environmental conditions) may be uploaded to the cloud, where centralized AI models can analyze and distribute optimized commands to an entire fleet. In some embodiments, the machine learning model(s) (e.g., TS-AST model(s), language models, VLMs, VLAs, LLMs, MMLMs, diffusion models, NeRF models, DNNs, etc.) described herein may be used to allow the robot to perceive and reason about the environment and/or communicate with one or more other robots and/or persons in an environment. For instance, the robot may use the TS-AST model(s) to perform real-time translation of a target speaker's utterances, and the translated text of these utterances may be fed into downstream components or systems of the robot (e.g., such as advanced reasoning systems and/or language models). In some embodiments, the robot may communicate (e.g., using one or more network interface cards (NICs) and/or data processing units (DPUs)) with one or more locally hosted servers/computing devices and/or with one or more remotely located servers/computing devices (e.g., in one or more data centers).

In some embodiments, the systems and methods described herein may be deployed in an in-vehicle infotainment (IVI) system or in-cabin experience (IX) application. For example, the infotainment system within a vehicle (e.g., cars, trucks, drones, construction equipment, robots, semi-autonomous vehicles, or autonomous vehicles) may include one or more onboard processors (e.g., CPUs, GPUs, hardware-based deep learning accelerators (DLAs), hardware-based programmable vision accelerators (PV As)-which may include one or more vector processing units (VPUs), direct memory access (DMA) systems, and/or pixel processing engines (PPEs), hardware-based optical flow accelerators (OFAs), SoCs, etc.) and memory and/or storage (e.g., for storing control algorithms, sensor data, and one or more machine learning models) and memory and/or storage (e.g., for storing entertainment content, navigation data, and user preferences). The system may use these processors to execute one or more machine learning models (e.g., language models, TS-AST model(s), etc.) to enable features such as voice control, personalized media recommendations, dynamic navigation, and real-time communication with other services through network connectivity. The in-vehicle infotainment system may also use natural language processing (NLP) models to enable voice-based interaction, as well as TS-AST models to perform real-time speech translation. The one or more machine learning models may be stored locally or accessed through one or more APIs that connect to cloud services, enabling the system to process requests in real time or near real-time.

Although examples may be described herein with respect to using machine learning models, such as neural networks, this is not intended to be limiting. For example, and without limitation, any of the various machine learning models and/or neural networks described herein may include any type of machine learning model, such as a machine learning model(s) using linear regression, logistic regression, decision trees, support vector machines (SVM), Naive Bayes, k-nearest neighbor (Knn), K means clustering, random forest, dimensionality reduction algorithms, gradient boosting algorithms, neural networks (e.g., auto-encoder neural networks, artificial neural networks (ANNs), convolutional neural networks (CNNs), recurrent neural networks (RNNs), perceptrons, Long/Short Term Memory (LSTM) networks, multilayer perceptron (MLP) networks, deep stacking networks (DSNs), generative pre-training (GPT) models or networks, feed forward networks, radial basis function ANNs, self-organizing maps (SOMs), Kohonen maps, Hopfield networks, Boltzmann machine, deep belief neural networks, deconvolutional neural networks, generative adversarial networks (GANs), liquid state machines, modular neural networks, liquid state machines, sequence-to-sequence models, networks using transformer architectures, state space models (SSMs) (e.g., networks using Mamba architectures (e.g., Mamba-1, Mamba 2, etc.), networks using selective state space models, networks using structured state space sequence models, etc.), diffusion models (e.g., diffusion probabilistic models, score-based generative models, etc.), neural radiance field (NeRF) models, Gaussian splat models, Kolmogorov-Arnold networks (KANs), models with encoder-only architectures, models with decoder-only architectures, models with encoder-decoder architectures, generative machine learning models, language models, large language models (LLMs), vision language models (VLMs), multi-modal language models (MMLMs), large action models (LAMs), vision-language-action (VLA) models, etc.), and/or other types of machine learning models.

In some embodiments, one or more transformer engines (TEs) may be implemented. The transformer engine may use micro-tensor scaling to optimize performance and accuracy - such as to enable 16-bit floating point (FP16), 8-bit floating point (FP8), and/or 4-bit floating point (FP4) artificial intelligence processing. For example, the transformer engine may use 16-bit or 8-bit floating point precision and an 8-bit or 4-bit floating point data format combined with software algorithms for increasing AI performance and capabilities. By reducing math operations to 8-bits or 4-bits, the TE allows for training larger networks faster without compromising accuracy. For example, the TEs may include a library for accelerating transformer models on processing devices - such as GPUs - to provide better performance with lower memory utilization in both training and inference. When the TE is combined with other technologies, such as high-speed interconnects between nodes (e.g., using switches - such as NVLink Switches) and tensor cores (which enable mixed-precision computing, such as microscaling precision support), server clusters may be more capable of training enormous networks (e.g., billions of parameters) at high speeds. As such, tensor core precisions of FP64, TF32, BF16, FP16, FP8, INT8, FP6, and FP4 may be supported, as well as CUDA core precisions of FP64, FP32, FP16, and BF16.

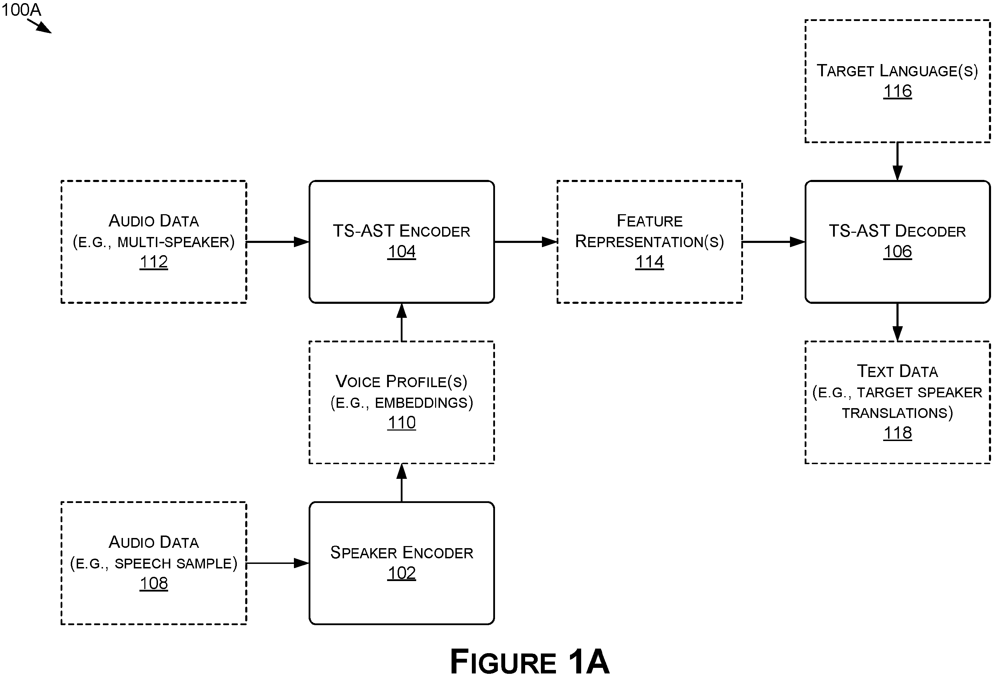

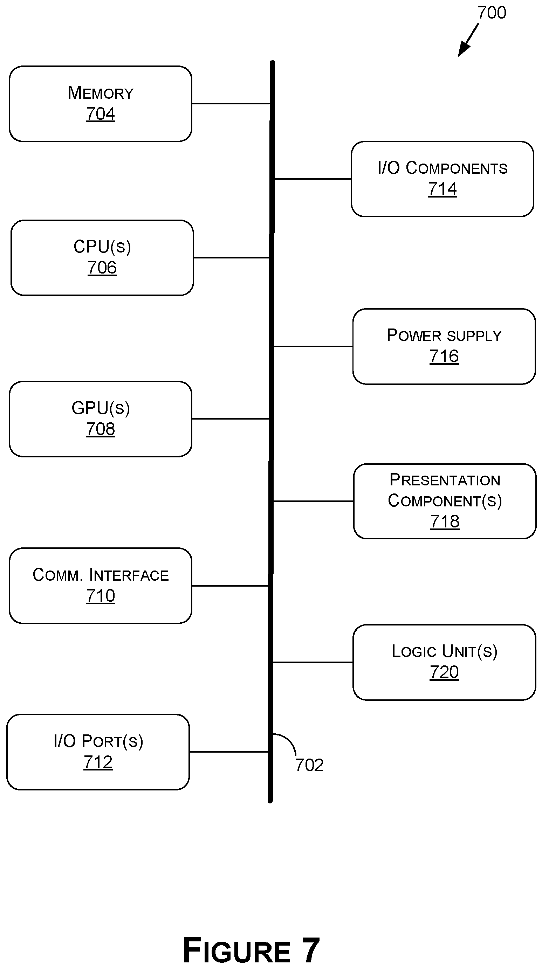

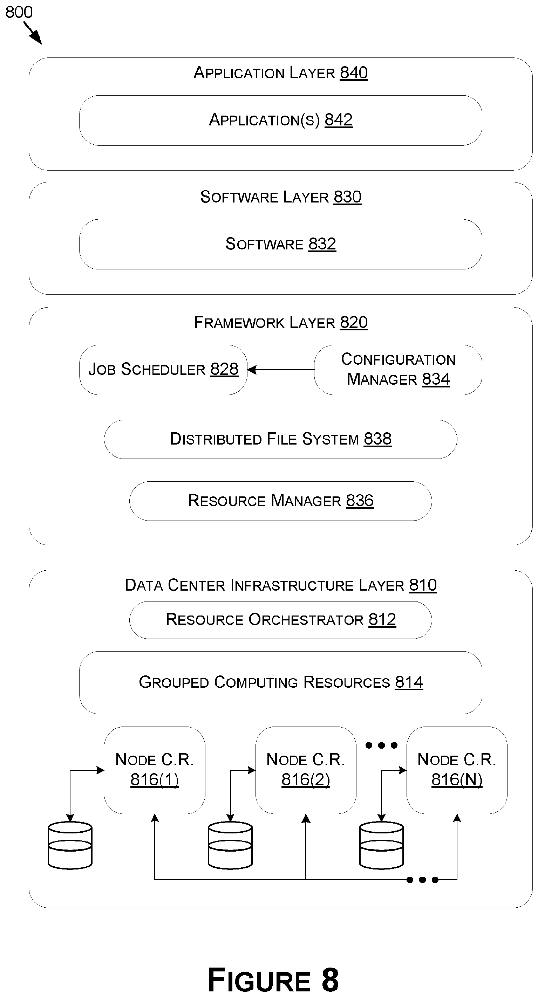

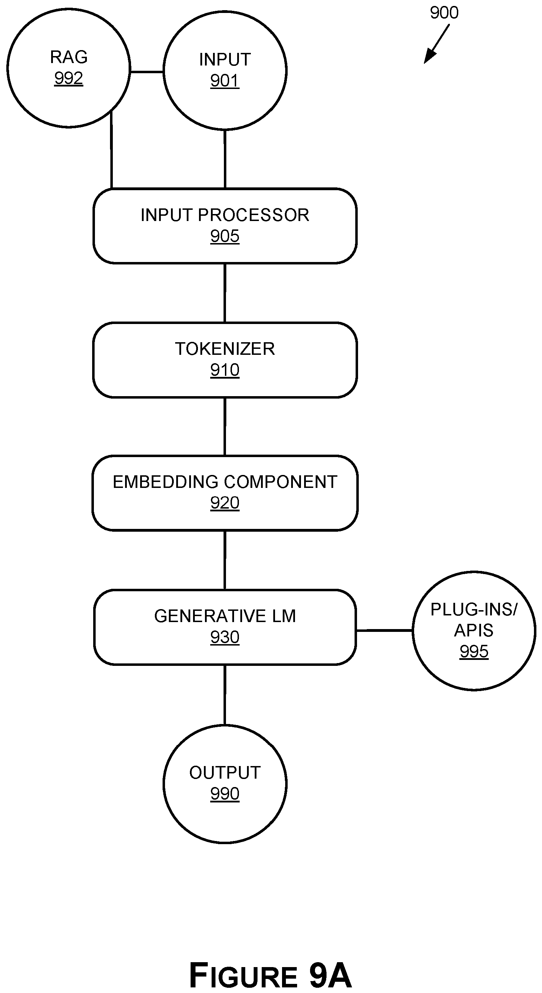

With reference to FIG. 1A, FIG. 1A is a data flow diagram illustrating an example of a process 100A for target speaker automatic speech translation (TS-AST), in accordance with some embodiments of the present disclosure. It should be understood that this and other arrangements described herein are set forth only as examples. Other arrangements and elements (e.g., machines, interfaces, functions, orders, groupings of functions, etc.) may be used in addition to or instead of those shown, and some elements may be omitted altogether. Further, many of the elements described herein are functional entities that may be implemented as discrete or distributed components or in conjunction with other components, and in any suitable combination and location. Various functions described herein as being performed by entities may be carried out by hardware, firmware, and/or software. For instance, various functions may be carried out by a processor executing instructions stored in memory. For example, in some embodiments, the system and methods described herein may be implemented using one or more generative language models (e.g., as described in FIGS. 9A-9C), one or more computing devices or components thereof (e.g., as described in FIG. 7), and/or one or more data centers or components thereof (e.g., as described in FIG. 8).

As shown in FIG. 1A, the process 100A may be implemented using, amongst additional or alternative systems and components, a speaker encoder 102, a TS-AST encoder 104, and a TS-AST decoder 106. As described above and herein, one or more of the speaker encoder 102, the TS-AST encoder 104, and/or the TS-AST decoder 106 may be associated with (e.g., included in) a TS-AST model (e.g., a machine learning model trained and configured to perform target speaker automatic speech translation). As a brief overview of the process 100A, the speaker encoder 102 may process audio data 108-which may represent one or more speech samples for one or more target speakers-and generate one or more voice profiles (e.g., embeddings) corresponding to the target speaker(s). The TS-AST encoder 104 may use the voice profile(s) 110 while processing audio data 112-which may represent a multi-speaker dialogue in which the target speaker(s) are participants-to generate one or more feature representations 114 encoding one or more utterances spoken by the target speaker(s) in the multi-speaker dialogue. The TS-AST decoder 106 may receive data indicating one or more target languages 116 to translate the speech into, and process the feature representation(s) 114 to generate text data 118 representing one or more translations of utterance(s) spoken by the target speaker(s).

In some examples, the speaker encoder 102 may be configured to generate the voice profile(s) 110 from the audio data 108 representing one or more speech samples (e.g., enrollment audio) corresponding to one or more target speakers. The voice profile(s) 110 may allow the downstream components of the TS-AST model-such as the TS-AST encoder 104 and/or the TS-AST decoder 106-to focus on the speech of the target speaker(s) while filtering out other voices in a multi-speaker dialogue. The voice profile(s) 110 may, in some instances, include one or more speaker embeddings associated with the target speaker(s). In some examples, the speaker embedding(s) may characterize one or more unique vocal features of the target speaker(s). For instance, the speaker embedding(s) may include fixed-length numerical representations of a speaker's voice that capture and indicate unique vocal characteristics of the speaker, such as tone, pitch, pace, accent, and/or other spectral and/or temporal features that may distinguish the speaker's voice from other speakers.

In some instances, the TS-AST encoder 104 may be configured to use the voice profile(s) 110 (e.g., speaker embeddings) from the speaker encoder 102 to identify utterances spoken by a target user during a multi-speaker dialogue. For instance, the TS-AST encoder 104 may process the audio data 112 representing a multi-speaker dialogue and use the voice profile(s) 110 to extract the feature representation(s) 114 from the audio data 112 corresponding to the target speaker's voice while suppressing or disregarding speech from non-target speakers. In some examples, the TS-AST encoder 104 may use the voice profile(s) 110 to filter the audio data 112 and identify utterances corresponding to target speakers associated with the voice profile(s). In various examples, the TS-AST encoder 104 may be implemented using neural network architectures and/or transformer-based models, such as Conformer, FastConformer, or other deep-learning models optimized for speech processing. These architectures may allow the TS-AST encoder 104 to efficiently process speech signals, extract meaningful patterns, and ensure robust speaker differentiation in real-time multi-speaker translation scenarios. Additionally, or alternatively, the TS-AST encoder 104 may be implemented using any machine learning architecture described herein.

In some examples, the feature representation(s) 114 may include or correspond to structured numerical encodings of speech characteristics that capture essential linguistic and acoustic properties of the input audio. The feature representation(s) 114 may include phonetic content, prosodic features (e.g., intonation, stress, rhythm), spectral features (e.g., Mel-frequency cepstral coefficients (MFCCs), log-Mel spectrograms), and/or temporal patterns that differentiate speakers and aid in speech translation. By using speaker embeddings from the voice profile(s) 110, the TS-AST encoder 104 may ensure that the extracted feature representation(s) 114 primarily reflect the speech characteristics of the target speaker while minimizing interference from other voices in the mixed audio input. In some instances, the feature representation(s) 114 may be transformed into one or more encoded representations (not shown) that may preserve both linguistic information (e.g., phoneme sequences, word structures, contextual dependencies) and speaker identity information (e.g., timbre, speech rhythm, articulation style) necessary for accurate translation. The encoded representation(s) may serve as input to the TS-AST decoder 106.

As shown, the process 100A may also include the feature representation(s) 114 (e.g., encoded feature representation(s)) being provided to the TS-AST decoder 106 for translation into the target language. In some examples, the TS-AST decoder 106 may be configured to receive and process the feature representation(s) 114 and generate text data 118 representing the translated utterance(s) of the target speaker(s) in the target language(s) 116. For instance, the TS-AST decoder 106 may receive, as inputs, the feature representation(s) 114 form the TS-AST encoder 104 and an indication of the target language(s) 116 to translate the speech into. The TS-AST decoder 106 may then process the inputs to generate the output text data 118 representing the translation of the target speaker utterance(s). In some instances, the TS-AST decoder 106 may be implemented using various architectures, including connectionist temporal classification (CTC), recurrent neural network transducers (RNN-T), hybrid CTC/RNN-T, Transformer decoders, or any other architectures or encoder models capable of converting the encoded representations into a structured text output.

As described herein, in some examples, the output text data 118 may be provided to one or more downstream components or systems, and the downstream component(s) or system(s) may use the text data 118 to perform one or more operations. For instance, a talking or smart kiosk application may send the text data 118 representing the translated utterance(s) of the target speaker(s) to an agentic AI system that processes the text data 118 and performs one or more operations on behalf of the smart kiosk application. Additionally, in one or more embodiments, a gaming application may use the text data 118 as input to an AI-based game assistant or any other downstream application related to the gaming application. In even further examples, a video conferencing application may use the text data 118 to cause presentation (e.g., on a display, user interface, etc.) of text representing the translated speech. Additionally, or alternatively, the video conferencing application may send the text data 118 to a text-to-speech (TTS) system and then output audio data representing the translated speech in real time (e.g., as a virtual interpreter).

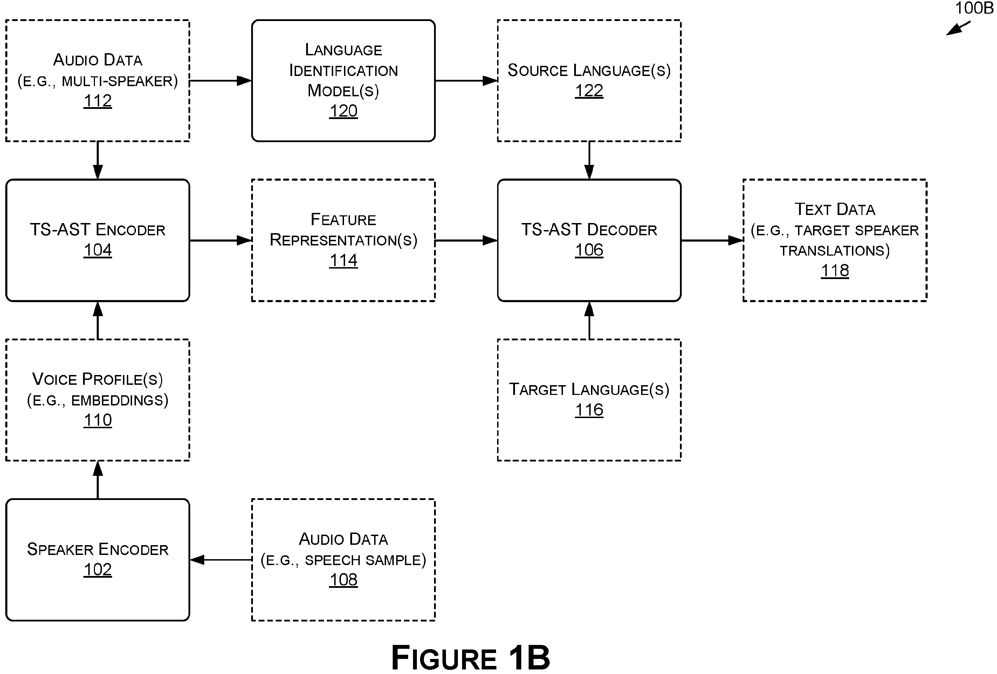

In some instances, the systems of the present disclosure may use one or more language identification systems or models to determine one or more source languages of the input speech. For instance, FIG. 1B is a data flow diagram illustrating another example of a process 100B for TS-AST that uses one or more language identification models 120 to determine one or more sources languages 122 of the input speech, in accordance with some embodiments of the present disclosure. As shown in the process 100B, when processing the audio data 112 representing the multi-speaker dialogue, the language identification model(s) 120 may be used to analyze the speech and identify the language(s) being spoken by the target speaker(s). This identification step may ensure that the various components of the TS-AST model (e.g., the TS-AST encoder 104 and/or the TS-AST decoder 106) correctly interpret the linguistic characteristics of the input audio data 112 before generating a translation. In some examples, the language identification model(s) 120 may function as a preprocessing step that enables the TS-AST decoder 106 to adapt to different source languages dynamically. For instance, in any-to-any translation scenarios where the input speech may be in any language from a supported set, the TS-AST decoder 106 may need to be aware of both the source language(s) 122 and the target language(s) 116 to produce accurate translations. By using the language identification model(s) 120 to determine the source language(s) 122, the TS-AST decoder 106 may be able to better select appropriate translation rules, vocabulary, and sentence structures, reducing errors that may arise from misinterpretation of the input.

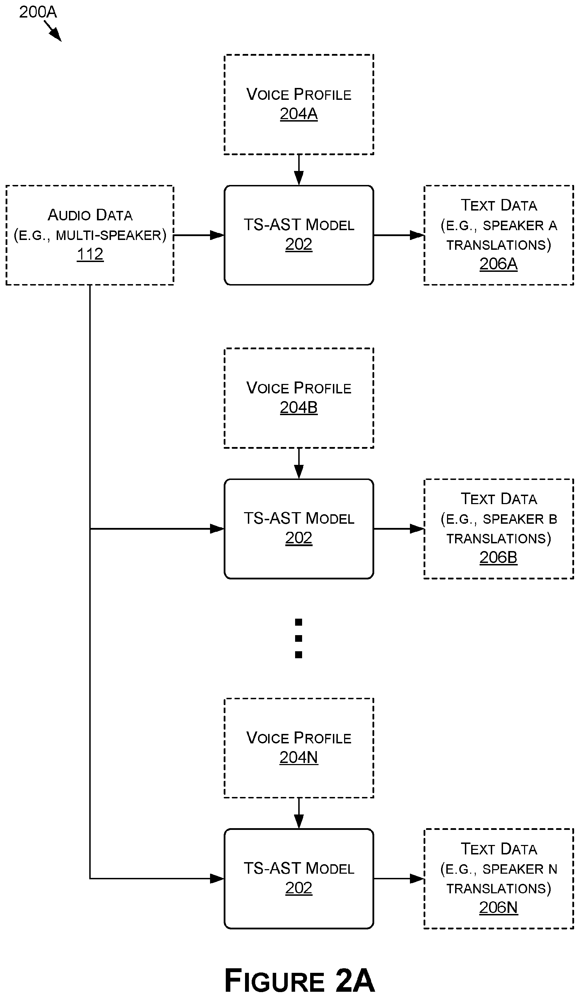

Referring now to FIG. 2A, FIG. 2A illustrates an example 200A of using a single TS-AST model multiple times to translate speech from a plurality of speakers associated with a multi-speaker dialogue, in accordance with some embodiments of the present disclosure. In the illustrated example 200A, a shared TS-AST model 202 is applied repeatedly to the same audio data 112 comprising speech from multiple speakers. One or more (e.g., each) instances of model executions may be personalized to a specific speaker using a corresponding voice profile 204A-204N.

For one or more (e.g., each) speakers in the multi-speaker dialogue, a respective voice profile (e.g., enrollment speech or embedding) may be provided to the TS-AST model 202. For example, voice profile 204A, corresponding to Speaker A, is supplied to the model along with the audio data 112. The model may then output text data 206A that represents the translation of the speech uttered by Speaker A, while disregarding the speech of other speakers. Similarly, voice profiles 204B and 204N, corresponding to Speakers B and N, respectively, may be used in separate model executions to generate text data 206B and 206N that represent the translations associated with those speakers.

In some examples, one or more (e.g., each) model executions may occur independently and may be executed in parallel, allowing the same TS-AST model architecture and trained weights to be reused without retraining or modification. This approach may enable efficient multi-speaker translation with reduced computational overhead, as only one model instance may need to be trained and stored. Despite being run multiple times, the latency for performing inference may remain comparable to single-speaker inference due to the possibility of parallel processing.

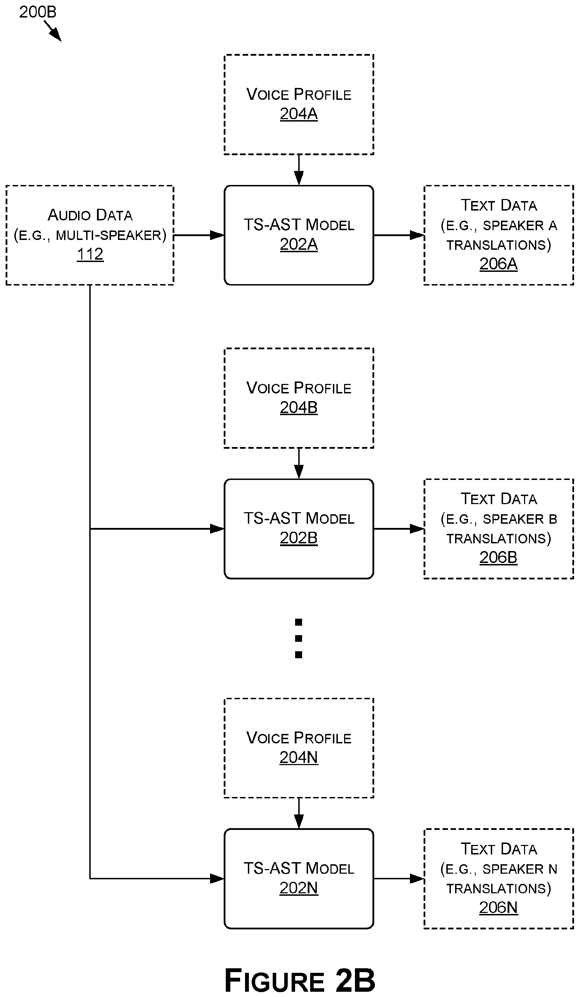

Referring now to FIG. 2B, FIG. 2B illustrates an example 200B of using multiple TS-AST models to translate speech from a plurality of speakers associated with a multi-speaker dialogue, in accordance with some embodiments of the present disclosure. In contrast to the approach shown in FIG. 2A, where a single TS-AST model is reused for multiple speaker-specific inferences, the example 200B of FIG. 2B may assign one or more dedicated model instances to one or more (e.g., each) speakers (or speaker-language pair), enabling translation through simultaneous parallel pipelines.

As described herein, in some examples, the systems and methods of the present disclosure may support multi-speaker automatic speech translation (multi-speaker AST) during inference by instantiating multiple TS-AST models for concurrent processing. That is, instead of limiting translation to a single target speaker, the systems and methods of the present disclosure may allow multiple speakers in a conversation to be processed individually while maintaining the same model architecture. Thus, after training the TS-AST model, the same trained model weights may be re-used to perform multiple inferences for a plurality (e.g., each) of speakers in the multi-speaker dialogue, in some embodiments.

For instance, as shown in the example 200B, the audio data 112 representing the multi-speaker dialogue may be applied as input to a first TS-AST model 202A, a second TS-AST model 202B, and an Nth TS-AST model 202N (where "N" may represent any number of the TS-AST models). In some instances, the number of models used during such an example may correspond to the number of speakers in the multi-speaker dialogue and/or the number of translations. For instance, if three speakers are engaged in an English conversation and the entire conversation is to be translated into Spanish with each specific speaker's speech transcribed separately, then up to three TS-AST models may be used. As another example, if three speakers are engaged in an English conversation and the entire conversation is to be translated into Spanish and German, then up to six TS-AST models may be used. Additionally, or alternatively, instead of increasing the number of TS-AST models, the number of TS-AST decoders may be increased (e.g., an additional decoder for each target language for each speaker).

In some examples, each of the TS-AST models may be provided with a voice profile or embeddings corresponding to the respective speaker they are to track and translate. For example, the first TS-AST model 202A may receive a first voice profile 204A associated with a first speaker (Speaker A), the second TS-AST model 202B may receive a second voice profile 204B associated with a second speaker (Speaker B), and the Nth TS-AST model 202N may receive an Nth voice profile 204N associated with an Nth speaker (Speaker N). By providing the first voice profile 204A for Speaker A, the first TS-AST model 202A may generate first text data 206A representing a translated transcript for Speaker A while disregarding speech from Speakers B-N. Similarly, based on the second voice profile 204B for Speaker B, the second TS-AST model 202B may generate second text data 206B representing a translated transcript for Speaker B while disregarding speech from Speaker A and Speaker N (as well as potentially other speakers). In this way, the TS-AST models 202A-202N may process the input audio data 112 representing the multi-speaker dialogue and generate the text data 206A-206N representing the translations.

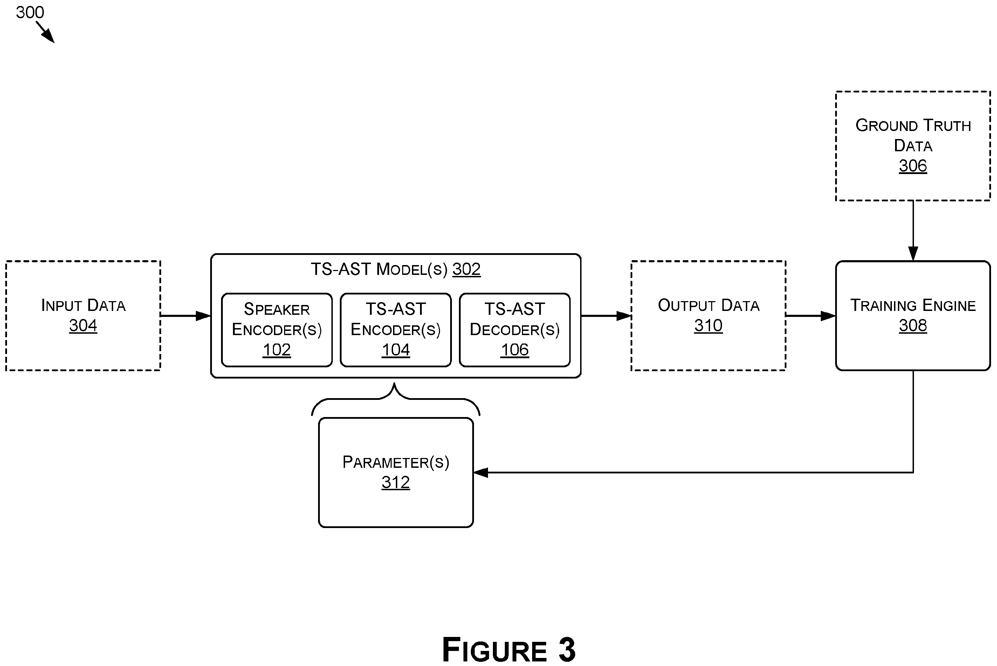

Referring now to FIG. 3, FIG. 3 is a data flow diagram illustrating an example of a process 300 for training one or more TS-AST models 302, in accordance with some embodiments of the present disclosure. In some instances, the TS-AST model(s) 302 may correspond to one or more of the TS-AST models 202A-202N described herein with respect to the example of FIG. 2. As shown, the TS-AST model(s) 302 may be trained using input data 304. In some examples, the input data 304 may include audio data representing a multi-speaker dialogue, data indicative of one or more source languages spoken by speakers in the multi-speaker dialogue, and/or data indicative of one or more target languages to translate the speech into.

The TS-AST model(s) 302 may be trained using the training input data 304 as well as corresponding ground truth data 306. The ground truth data 304 may include annotations, labels, masks, and/or the like. For instance, in some examples, the ground truth data 306 may include at least text data representing one or more translations of one or more utterances spoken by one or more target speakers in the multi-speaker dialogue of the input data 304. In some examples, the ground truth data 306 may be synthetically produced (e.g., generated from computer models or renderings), real produced (e.g., designed and produced from real-world data), machine-automated (e.g., using feature analysis and learning to extract features from data and then generate labels), human produced (e.g., by a human translator), and/or a combination thereof (e.g., synthetically produced and then human proof-read). In some examples, for each instance of the input data 304, there may be corresponding ground truth data 306.

A training engine 308 may use one or more loss functions that measure loss (e.g., error) in output data 310 (which may represent translated speech, speech embeddings, encoded features from audio data, voice profiles, or any outputs of the TS-AST model(s) 302 and/or the speaker encoder(s) 102, the TS-AST encoder(s) 104, and/or the TS-AST decoder(s) 106) as compared to the ground truth data 306. Any type of loss function may be used, such as cross entropy loss, mean squared error, mean absolute error, mean bias error, and/or other loss function types. In some examples, the training engine 308 may use different loss functions to evaluate different types of outputs. For example, the voice profiles may have a first loss function, the encoded features may have a second loss function, the textual translations may have a third loss function, and so forth. In such examples, the loss functions may be combined to form a total loss, and the total loss may be used to train (e.g., update one or more parameters 312 of) the TS-AST model(s) 302. In any example, backward pass computations may be performed to recursively compute gradients of the loss function(s) with respect to training parameters. In some examples, weights and biases of the TS-AST model(s) 302 may be used to compute these gradients.

In some examples, the speaker encoder(s) 102 may be jointly trained with the TS-AST encoder(s) 104 and/or the TS-AST decoder(s) 106. Additionally, or alternatively, the speaker encoder(s) 102 may be a pretrained model trained offline for speaker identification and/or speaker diarization. In some instances, the training of the TS-AST model(s) 302 may begin with a pretrained or partially-trained speaker encoder(s) 102, which may then be fine-tuned during training of the joint TS-AST model(s) 302. Additionally, in some examples, the language identification model(s) described herein (not shown in FIG. 3) may be jointly trained with the rest of the TS-AST model(s) 302. Alternatively, in some examples, a pre-trained language identification system may be deployed.

In some examples, the various TS-AST models (e.g., the TS-AST model(s) 302 and/or the TS-AST models 202A-202N) described herein may either include the speaker encoder(s) 102 as part of the model or use speaker embeddings (e.g., voice profiles) from a pretrained speaker recognition system/model and/or or from a speaker diarization or Sortformer type of systems. In other words, while many of the examples herein describe the TS-AST models as including a speaker encoder to process enrollment speech of a user and generate voice profiles/speaker embeddings, this is not intended to be limiting, and the TS-AST models may receive the voice profiles/speaker embeddings from a standalone system/model that may, in some instances, be trained separately from the TS-AST model. Additionally, although described herein as being associated with the same model architecture, the TS-AST encoder and the TS-AST decoder may, in some instances, be associated with different model architectures or implemented using entirely different models.

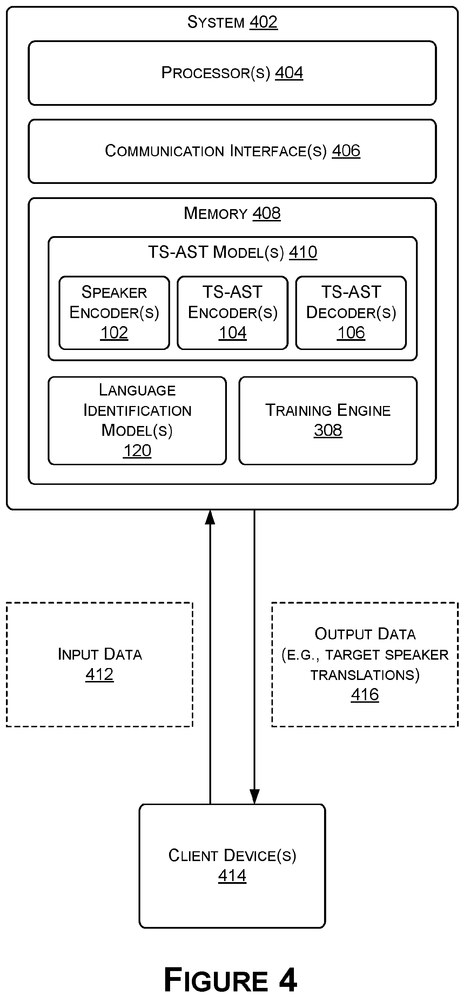

Referring now to FIG. 4, FIG. 4 is a block diagram illustrating an example of a system 402 that may perform one or more of the processes and methods described herein, in accordance with some embodiments of the present disclosure. As shown, the system 402 may include one or more processors 404 (which may include, and/or be similar to, a CPU(s) 706 and/or a GPU(s) 708), one or more communication interfaces 406 (which may include, and/or be similar to, a communication interface(s) 710), and a memory 408 (which may include, and/or be similar to, a memory 704). As shown, the memory 408 may store one or more TS-AST models 410 (which may correspond to one or more of the TS-AST models 202A-202N and/or the TS-AST model(s) 302), the language identification model(s) 120, and/or the training engine 308. Additionally, the processor(s) 404 may execute one or more of the TS-AST model(s) 410, the language identification model(s) 120, and/or the training engine 308 to perform one or more of the operations described herein.

For instance, and as shown, the system 402 may receive input data 412 from one or more client devices 414. In some examples, the input data 412 may include first audio data (which may include, and/or be similar to, the audio data 108) representing sample speech from one or more target speakers, second audio data (which may include, and/or be similar to, the audio data 112) representing a multi-speaker dialogue, and language data (which may include, and/or be similar to, the data indicative of the target language(s) 116) representing one or more target languages that the client device(s) 414 would like the speech translated. The system 402 may then perform one or more of the processes described herein to process the input data 412 and generate output data 416 (which may include, and/or be similar to, text data 118) representing text corresponding to the speech of the target speaker(s) and in the target language(s). Additionally, the system 402 may send the output data 416 back to the client device(s) 414 such that the client device(s) 414 may use the output data 416 to perform one or more operations.

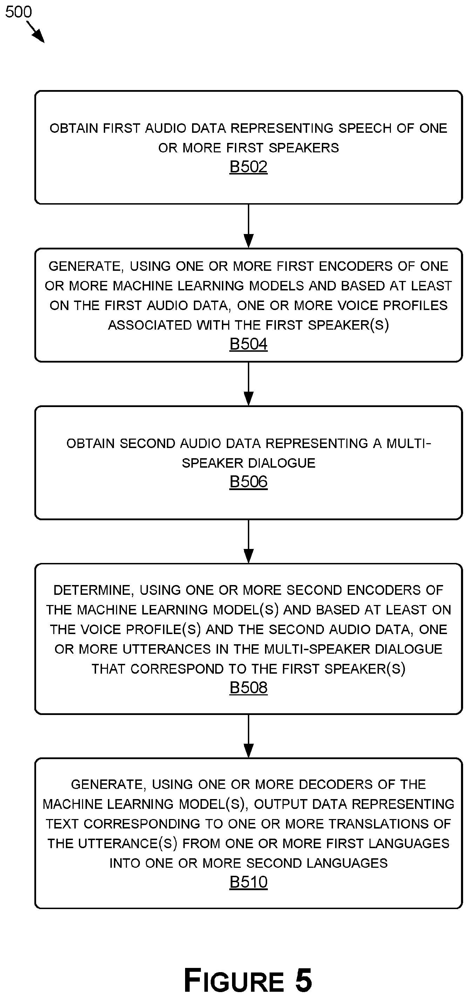

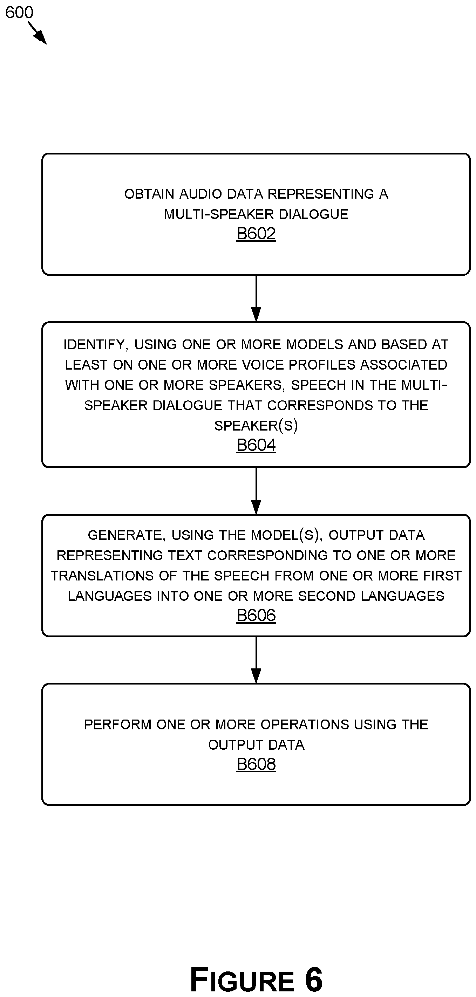

Now referring to FIGS. 5 and 6, each block of method 500 and 600, described herein, comprises a computing process that may be performed using any combination of hardware, firmware, and/or software. For instance, various functions may be carried out by a processor executing instructions stored in memory. The methods may also be embodied as computer-usable instructions stored on computer storage media. The methods may be provided by a standalone application, a service or hosted service (standalone or in combination with another hosted service), or a plug-in to another product, to name a few. In addition, methods 500 and 600 are described, by way of example, with respect to the system of FIGS. 1A-4. However, these methods may additionally or alternatively be executed by any one system, or any combination of systems, including, but not limited to, those described herein.

FIG. 5 is a flow diagram illustrating an example of a method 500 for using one or more TS-AST models to translate speech, in accordance with some embodiments of the present disclosure. The method 500, at block B502, includes obtaining first audio data representing speech of one or more first speakers. For instance, the speaker encoder 102 may obtain the audio data 108 representing the speech of the first speaker(s). This may include speech samples or enrollment speech associated with the first speaker(s).

The method 500, at block B504, includes generating, using one or more first encoders of one or more machine learning models and based at least on the first audio data, one or more voice profiles associated with the first speaker(s). For example, the speaker encoder 102 may generate the voice profile(s) 110 associated with the first speaker(s) based at least on processing the first audio data 108.

The method 500, at block B506, includes obtaining second audio data representing a multi-speaker dialogue. For instance, the TS-AST encoder 104 may obtain the second audio data 112 representing the multi-speaker dialogue. That is, the multi-speaker dialogue may include utterances from a plurality of speakers participating in a conversation, meeting, or any other type of dialogue. This plurality of speakers may include at least the first speaker(s).

The method 500, at block B508, includes determining, using one or more second encoders of the machine learning model(s) and based at least on the voice profile(s) and the second audio data, one or more utterances in the multi-speaker dialogue that correspond to the first speaker(s). For example, the TS-AST encoder 104 may process the audio data 112 and use the voice profile(s) 110 to determine the utterance(s) in the multi-speaker dialogue that correspond to (e.g., were spoken by) the first speaker(s). In some examples, the TS-AST encoder 104 may, based on the processing of the audio data 112, generate one ore encoded feature representations associated with the speech of the first speaker(s).

The method 500, at block B510, includes generating, using one or more decoders of the machine learning model(s), output data representing text corresponding to one or more translations of the utterance(s) from one or more first languages into one or more second languages. For instance, the TS-AST decoder 106 may generate the text data 118 representing the translation(s) of the utterance(s) from the first language(s) into the second language(s). In some examples, the TS-AST decoder 106 may receive, as inputs, the feature representation(s) 114 and data indicating the second language(s) (e.g., target language(s)) to translate the speech into. Based on these inputs, the TS-AST decoder 106 may generate the text data corresponding to the translation(s).

Referring now to FIG. 6, FIG. 6 is a flow diagram illustrating an example of a method 600 for translating speech of a target speaker and performing operations using the translation, in accordance with some embodiments of the present disclosure. The method 600, at block B602, includes obtaining audio data representing a multi-speaker dialogue. For instance, the system 402 may use the communication interface(s) 406 to receive the input data 412 from the client device(s) 414. The input data 412 may include the audio data representing the multi-speaker dialogue.

The method 600, at block B604, includes identifying, using one or more models and based at least on one or more voice profiles associated with one or more speakers, speech in the multi-speaker dialogue that corresponds to the speaker(s). For example, the system 402 may use the TS-AST model(s) 410 to process the input data 412 and use the voice profile(s) to identify the speech in the multi-speaker dialogue that corresponds to the speaker(s). In some examples, the TS-AST encoder(s) 104 may identify the speech corresponding to the speaker(s) based on receiving the voice profile(s) from the speaker encoder(s) 102.

The method 600, at block B606, includes generating, using the model(s), output data representing text corresponding to one or more translations of the speech from one or more first languages into one or more second languages. For instance, the system 402 may use the TS-AST model(s) 410 to generate the output data representing the text corresponding to the translation(s) of the speech from the first language(s) into the second language(s). In some instances, the TS-AST decoder(s) 106 may generate the output data based at least on processing one or more encoded feature representations generated by the TS-AST encoder(s) 104 of the TS-AST model(s) 410.

The method 600, at block B608, includes performing one or more operations using the output data. For example, the system 402 may use the communication interface(s) 406 to send the output data 416 to the client device(s) 414. The client device(s) 414 may then use the output data 416 to perform one or more additional operations. For instance, a talking or smart kiosk application may send the output data 416 representing the translated utterance(s) of the target speaker(s) to an agentic AI system that processes the output data 416 and performs one or more operations on behalf of the smart kiosk application. Additionally, in one or more embodiments, a gaming application may use the output data 416 as input to an AI-based game assistant or any other downstream application related to the gaming application. In even further examples, a video conferencing application may use the output data 416 to cause presentation (e.g., on a display, user interface, etc.) of text representing the translated speech. Additionally, or alternatively, the video conferencing application may send the output data 416 to a text-to-speech (TTS) system and then output audio data representing the translated speech in real time (e.g., as a virtual interpreter).

### EXAMPLE COMPUTING DEVICE

FIG. 7 is a block diagram of an example computing device(s) 700 suitable for use in implementing some embodiments of the present disclosure. Computing device 700 may include an interconnect system 702 that directly or indirectly couples the following devices: memory 704, one or more central processing units (CPUs) 706, one or more graphics processing units (GPUs) 708, a communication interface 710, input/output (I/O) ports 712, input/output components 714, a power supply 716, one or more presentation components 718 (e.g., display(s)), and one or more logic units 720. In at least one embodiment, the computing device(s) 700 may comprise one or more virtual machines (VMs), and/or any of the components thereof may comprise virtual components (e.g., virtual hardware components). For non-limiting examples, one or more of the GPUs 708 may comprise one or more vGPUs, one or more of the CPUs 706 may comprise one or more vCPUs, and/or one or more of the logic units 720 may comprise one or more virtual logic units. As such, a computing device(s) 700 may include discrete components (e.g., a full GPU dedicated to the computing device 700), virtual components (e.g., a portion of a GPU dedicated to the computing device 700), or a combination thereof.

Although the various blocks of FIG. 7 are shown as connected via the interconnect system 702 with lines, this is not intended to be limiting and is for clarity only. For example, in some embodiments, a presentation component 718, such as a display device, may be considered an I/O component 714 (e.g., if the display is a touch screen). As another example, the CPUs 706 and/or GPUs 708 may include memory (e.g., the memory 704 may be representative of a storage device in addition to the memory of the GPUs 708, the CPUs 706, and/or other components). In other words, the computing device of FIG. 7 is merely illustrative. Distinction is not made between such categories as "workstation," "server," "laptop," "desktop," "tablet," "client device," "mobile device," "hand-held device," "game console," "electronic control unit (ECU)," "virtual reality system," and/or other device or system types, as all are contemplated within the scope of the computing device of FIG. 7.

The interconnect system 702 may represent one or more links or busses, such as an address bus, a data bus, a control bus, or a combination thereof. The interconnect system 702 may include one or more bus or link types, such as an industry standard architecture (ISA) bus, an extended industry standard architecture (EISA) bus, a video electronics standards association (VESA) bus, a peripheral component interconnect (PCI) bus, a peripheral component interconnect express (PCIe) bus, and/or another type of bus or link. In some embodiments, there are direct connections between components. As an example, the CPU 706 may be directly connected to the memory 704. Further, the CPU 706 may be directly connected to the GPU 708. Where there is direct, or point-to-point connection between components, the interconnect system 702 may include a PCIe link to carry out the connection. In these examples, a PCI bus need not be included in the computing device 700.

The memory 704 may include any of a variety of computer-readable media. The computer-readable media may be any available media that may be accessed by the computing device 700. The computer-readable media may include both volatile and nonvolatile media, and removable and non-removable media. By way of example, and not limitation, the computer-readable media may comprise computer-storage media and communication media.

The computer-storage media may include both volatile and nonvolatile media and/or removable and non-removable media implemented in any method or technology for storage of information such as computer-readable instructions, data structures, program modules, and/or other data types. For example, the memory 704 may store computer-readable instructions (e.g., that represent a program(s) and/or a program element(s), such as an operating system. Computer-storage media may include, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which may be used to store the desired information and which may be accessed by computing device 700. As used herein, computer storage media does not comprise signals per se.

The computer storage media may embody computer-readable instructions, data structures, program modules, and/or other data types in a modulated data signal such as a carrier wave or other transport mechanism and includes any information delivery media. The term "modulated data signal" may refer to a signal that has one or more of its characteristics set or changed in such a manner as to encode information in the signal. By way of example, and not limitation, the computer storage media may include wired media such as a wired network or direct-wired connection, and wireless media such as acoustic, RF, infrared and other wireless media. Combinations of any of the above should also be included within the scope of computer-readable media.

The CPU(s) 706 may be configured to execute at least some of the computer-readable instructions to control one or more components of the computing device 700 to perform one or more of the methods and/or processes described herein. The CPU(s) 706 may each include one or more cores (e.g., one, two, four, eight, twenty-eight, seventy-two, etc.) that are capable of handling a multitude of software threads simultaneously. The CPU(s) 706 may include any type of processor, and may include different types of processors depending on the type of computing device 700 implemented (e.g., processors with fewer cores for mobile devices and processors with more cores for servers). For example, depending on the type of computing device 700, the processor may be an Advanced RISC Machines (ARM) processor implemented using Reduced Instruction Set Computing (RISC) or an x86 processor implemented using Complex Instruction Set Computing (CISC). The computing device 700 may include one or more CPUs 706 in addition to one or more microprocessors or supplementary co-processors, such as math co-processors.

In addition to or alternatively from the CPU(s) 706, the GPU(s) 708 may be configured to execute at least some of the computer-readable instructions to control one or more components of the computing device 700 to perform one or more of the methods and/or processes described herein. One or more of the GPU(s) 708 may be an integrated GPU (e.g., with one or more of the CPU(s) 706 and/or one or more of the GPU(s) 708 may be a discrete GPU. In embodiments, one or more of the GPU(s) 708 may be a coprocessor of one or more of the CPU(s) 706. The GPU(s) 708 may be used by the computing device 700 to render graphics (e.g., 3D graphics) or perform general purpose computations. For example, the GPU(s) 708 may be used for General-Purpose computing on GPUs (GPGPU). The GPU(s) 708 may include hundreds or thousands of cores that are capable of handling hundreds or thousands of software threads simultaneously. The GPU(s) 708 may generate pixel data for output images in response to rendering commands (e.g., rendering commands from the CPU(s) 706 received via a host interface). The GPU(s) 708 may include graphics memory, such as display memory, for storing pixel data or any other suitable data, such as GPGPU data. The display memory may be included as part of the memory 704. The GPU(s) 708 may include two or more GPUs operating in parallel (e.g., via a link). The link may directly connect the GPUs (e.g., using NVLINK) or may connect the GPUs through a switch (e.g., using NVSwitch). When combined together, each GPU 708 may generate pixel data or GPGPU data for different portions of an output or for different outputs (e.g., a first GPU for a first image and a second GPU for a second image). Each GPU may include its own memory, or may share memory with other GPUs.

In addition to or alternatively from the CPU(s) 706 and/or the GPU(s) 708, the logic unit(s) 720 may be configured to execute at least some of the computer-readable instructions to control one or more components of the computing device 700 to perform one or more of the methods and/or processes described herein. In embodiments, the CPU(s) 706, the GPU(s) 708, and/or the logic unit(s) 720 may discretely or jointly perform any combination of the methods, processes and/or portions thereof. One or more of the logic units 720 may be part of and/or integrated in one or more of the CPU(s) 706 and/or the GPU(s) 708 and/or one or more of the logic units 720 may be discrete components or otherwise external to the CPU(s) 706 and/or the GPU(s) 708. In embodiments, one or more of the logic units 720 may be a coprocessor of one or more of the CPU(s) 706 and/or one or more of the GPU(s) 708.

Examples of the logic unit(s) 720 include one or more processing cores and/or components thereof, such as Data Processing Units (DPUs), Tensor Cores (TCs), Tensor Processing Units(TPUs), Pixel Visual Cores (PVCs), Vision Processing Units (VPUs), Graphics Processing Clusters (GPCs), Texture Processing Clusters (TPCs), Streaming Multiprocessors (SMs), Tree Traversal Units (TTUs), Artificial Intelligence Accelerators (AIAs), Deep Learning Accelerators (DLAs), Arithmetic-Logic Units (ALUs), Application-Specific Integrated Circuits (ASICs), Floating Point Units (FPUs), input/output (I/O) elements, peripheral component interconnect (PCI) or peripheral component interconnect express (PCIe) elements, and/or the like.

The communication interface 710 may include one or more receivers, transmitters, and/or transceivers that enable the computing device 700 to communicate with other computing devices via an electronic communication network, included wired and/or wireless communications. The communication interface 710 may include components and functionality to enable communication over any of a number of different networks, such as wireless networks (e.g., Wi-Fi, Z-Wave, Bluetooth, Bluetooth LE, ZigBee, etc.), wired networks (e.g., communicating over Ethernet or InfiniBand), low-power wide-area networks (e.g., LoRaWAN, SigFox, etc.), and/or the Internet. In one or more embodiments, logic unit(s) 720 and/or communication interface 710 may include one or more data processing units (DPUs) to transmit data received over a network and/or through interconnect system 702 directly to (e.g., a memory of) one or more GPU(s) 708.

The I/O ports 712 may enable the computing device 700 to be logically coupled to other devices including the I/O components 714, the presentation component(s) 718, and/or other components, some of which may be built in to (e.g., integrated in) the computing device 700. Illustrative I/O components 714 include a microphone, mouse, keyboard, joystick, game pad, game controller, satellite dish, scanner, printer, wireless device, etc. The I/O components 714 may provide a natural user interface (NUI) that processes air gestures, voice, or other physiological inputs generated by a user. In some instances, inputs may be transmitted to an appropriate network element for further processing. An NUI may implement any combination of speech recognition, stylus recognition, facial recognition, biometric recognition, gesture recognition both on screen and adjacent to the screen, air gestures, head and eye tracking, and touch recognition (as described in more detail below) associated with a display of the computing device 700. The computing device 700 may be include depth cameras, such as stereoscopic camera systems, infrared camera systems, RGB camera systems, touchscreen technology, and combinations of these, for gesture detection and recognition. Additionally, the computing device 700 may include accelerometers or gyroscopes (e.g., as part of an inertia measurement unit (IMU)) that enable detection of motion. In some examples, the output of the accelerometers or gyroscopes may be used by the computing device 700 to render immersive augmented reality or virtual reality.

The power supply 716 may include a hard-wired power supply, a battery power supply, or a combination thereof. The power supply 716 may provide power to the computing device 700 to enable the components of the computing device 700 to operate.

The presentation component(s) 718 may include a display (e.g., a monitor, a touch screen, a television screen, a heads-up-display (HUD), other display types, or a combination thereof), speakers, and/or other presentation components. The presentation component(s) 718 may receive data from other components (e.g., the GPU(s) 708, the CPU(s) 706, DPUs, etc.), and output the data (e.g., as an image, video, sound, etc.).

### EXAMPLE DATA CENTER

FIG. 8 illustrates an example data center 800 that may be used in at least one embodiments of the present disclosure. The data center 800 may include a data center infrastructure layer 810, a framework layer 820, a software layer 830, and/or an application layer 840.

As shown in FIG. 8, the data center infrastructure layer 810 may include a resource orchestrator 812, grouped computing resources 814, and node computing resources ("node C.R.s") 816(1)-816(N), where "N" represents any whole, positive integer. In at least one embodiment, node C.R.s 816(1)-816(N) may include, but are not limited to, any number of central processing units (CPUs) or other processors (including DPUs, accelerators, field programmable gate arrays (FPGAs), graphics processors or graphics processing units (GPUs), etc.), memory devices (e.g., dynamic read-only memory), storage devices (e.g., solid state or disk drives), network input/output (NW I/O) devices, network switches, virtual machines (VMs), power modules, and/or cooling modules, etc. In some embodiments, one or more node C.R.s from among node C.R.s 816(1)-816(N) may correspond to a server having one or more of the above-mentioned computing resources. In addition, in some embodiments, the node C.R.s 816(1)-8161(N) may include one or more virtual components, such as vGPUs, vCPUs, and/or the like, and/or one or more of the node C.R.s 816(1)-816(N) may correspond to a virtual machine (VM).

In at least one embodiment, grouped computing resources 814 may include separate groupings of node C.R.s 816 housed within one or more racks (not shown), or many racks housed in data centers at various geographical locations (also not shown). Separate groupings of node C.R.s 816 within grouped computing resources 814 may include grouped compute, network, memory or storage resources that may be configured or allocated to support one or more workloads. In at least one embodiment, several node C.R.s 816 including CPUs, GPUs, DPUs, and/or other processors may be grouped within one or more racks to provide compute resources to support one or more workloads. The one or more racks may also include any number of power modules, cooling modules, and/or network switches, in any combination.

The resource orchestrator 812 may configure or otherwise control one or more node C.R.s 816(1)-816(N) and/or grouped computing resources 814. In at least one embodiment, resource orchestrator 812 may include a software design infrastructure (SDI) management entity for the data center 800. The resource orchestrator 812 may include hardware, software, or some combination thereof.

In at least one embodiment, as shown in FIG. 8, framework layer 820 may include a job scheduler 828, a configuration manager 834, a resource manager 836, and/or a distributed file system 838. The framework layer 820 may include a framework to support software 832 of software layer 830 and/or one or more application(s) 842 of application layer 840. The software 832 or application(s) 842 may respectively include web-based service software or applications, such as those provided by Amazon Web Services, Google Cloud and Microsoft Azure. The framework layer 820 may be, but is not limited to, a type of free and open-source software web application framework such as Apache Spark^{™} (hereinafter "Spark") that may utilize distributed file system 838 for large-scale data processing (e.g., "big data"). In at least one embodiment, job scheduler 828 may include a Spark driver to facilitate scheduling of workloads supported by various layers of data center 800. The configuration manager 834 may be capable of configuring different layers such as software layer 830 and framework layer 820 including Spark and distributed file system 838 for supporting large-scale data processing. The resource manager 836 may be capable of managing clustered or grouped computing resources mapped to or allocated for support of distributed file system 838 and job scheduler 828. In at least one embodiment, clustered or grouped computing resources may include grouped computing resource 814 at data center infrastructure layer 810. The resource manager 836 may coordinate with resource orchestrator 812 to manage these mapped or allocated computing resources.

In at least one embodiment, software 832 included in software layer 830 may include software used by at least portions of node C.R.s 816(1)-816(N), grouped computing resources 814, and/or distributed file system 838 of framework layer 820. One or more types of software may include, but are not limited to, Internet web page search software, e-mail virus scan software, database software, and streaming video content software.

In at least one embodiment, application(s) 842 included in application layer 840 may include one or more types of applications used by at least portions of node C.R.s 816(1)-816(N), grouped computing resources 814, and/or distributed file system 838 of framework layer 820. One or more types of applications may include, but are not limited to, any number of a genomics application, a cognitive compute, and a machine learning application, including training or inferencing software, machine learning framework software (e.g., PyTorch, TensorFlow, Caffe, etc.), and/or other machine learning applications used in conjunction with one or more embodiments.

In at least one embodiment, any of configuration manager 834, resource manager 836, and resource orchestrator 812 may implement any number and type of self-modifying actions based on any amount and type of data acquired in any technically feasible fashion. Self-modifying actions may relieve a data center operator of data center 800 from making possibly bad configuration decisions and possibly avoiding underutilized and/or poor performing portions of a data center.

The data center 800 may include tools, services, software or other resources to train one or more machine learning models or predict or infer information using one or more machine learning models according to one or more embodiments described herein. For example, a machine learning model(s) may be trained by calculating weight parameters according to a neural network architecture using software and/or computing resources described above with respect to the data center 800. In at least one embodiment, trained or deployed machine learning models corresponding to one or more neural networks may be used to infer or predict information using resources described above with respect to the data center 800 by using weight parameters calculated through one or more training techniques, such as but not limited to those described herein.

In at least one embodiment, the data center 800 may use CPUs, application-specific integrated circuits (ASICs), GPUs, FPGAs, and/or other hardware (or virtual compute resources corresponding thereto) to perform training and/or inferencing using above-described resources. Moreover, one or more software and/or hardware resources described above may be configured as a service to allow users to train or performing inferencing of information, such as image recognition, speech recognition, or other artificial intelligence services.

### EXAMPLE NETWORK ENVIRONMENTS

Network environments suitable for use in implementing embodiments of the disclosure may include one or more client devices, servers, network attached storage (NAS), other backend devices, and/or other device types. The client devices, servers, and/or other device types (e.g., each device) may be implemented on one or more instances of the computing device(s) 700 of FIG. 7 - e.g., each device may include similar components, features, and/or functionality of the computing device(s) 700. In addition, where backend devices (e.g., servers, NAS, etc.) are implemented, the backend devices may be included as part of a data center 800, an example of which is described in more detail herein with respect to FIG. 8.

Components of a network environment may communicate with each other via a network(s), which may be wired, wireless, or both. The network may include multiple networks, or a network of networks. By way of example, the network may include one or more Wide Area Networks (WANs), one or more Local Area Networks (LANs), one or more public networks such as the Internet and/or a public switched telephone network (PSTN), and/or one or more private networks. Where the network includes a wireless telecommunications network, components such as a base station, a communications tower, or even access points (as well as other components) may provide wireless connectivity.

Compatible network environments may include one or more peer-to-peer network environments - in which case a server may not be included in a network environment - and one or more client-server network environments - in which case one or more servers may be included in a network environment. In peer-to-peer network environments, functionality described herein with respect to a server(s) may be implemented on any number of client devices.

In at least one embodiment, a network environment may include one or more cloud-based network environments, a distributed computing environment, a combination thereof, etc. A cloud-based network environment may include a framework layer, a job scheduler, a resource manager, and a distributed file system implemented on one or more of servers, which may include one or more core network servers and/or edge servers. A framework layer may include a framework to support software of a software layer and/or one or more application(s) of an application layer. The software or application(s) may respectively include web-based service software or applications. In embodiments, one or more of the client devices may use the web-based service software or applications (e.g., by accessing the service software and/or applications via one or more application programming interfaces (APIs)). The framework layer may be, but is not limited to, a type of free and open-source software web application framework such as that may use a distributed file system for large-scale data processing (e.g., "big data").

A cloud-based network environment may provide cloud computing and/or cloud storage that carries out any combination of computing and/or data storage functions described herein (or one or more portions thereof). Any of these various functions may be distributed over multiple locations from central or core servers (e.g., of one or more data centers that may be distributed across a state, a region, a country, the globe, etc.). If a connection to a user (e.g., a client device) is relatively close to an edge server(s), a core server(s) may designate at least a portion of the functionality to the edge server(s). A cloud-based network environment may be private (e.g., limited to a single organization), may be public (e.g., available to many organizations), and/or a combination thereof (e.g., a hybrid cloud environment).

The client device(s) may include at least some of the components, features, and functionality of the example computing device(s) 700 described herein with respect to FIG. 7. By way of example and not limitation, a client device may be embodied as a Personal Computer (PC), a laptop computer, a mobile device, a smartphone, a tablet computer, a smart watch, a wearable computer, a Personal Digital Assistant (PDA), an MP3 player, a virtual reality headset, a Global Positioning System (GPS) or device, a video player, a video camera, a surveillance device or system, a vehicle, a boat, a flying vessel, a virtual machine, a drone, a robot, a handheld communications device, a hospital device, a gaming device or system, an entertainment system, a vehicle computer system, an embedded system controller, a remote control, an appliance, a consumer electronic device, a workstation, an edge device, any combination of these delineated devices, or any other suitable device.

### EXAMPLE LANGUAGE MODELS

In at least some embodiments, language models, such as large language models (LLMs), small language models (SLMs), vision language models (VLMs), multi-modal language models (MMLMs), and/or other types of generative artificial intelligence (AI) may be implemented. These models may be capable of understanding, summarizing, translating, and/or otherwise generating text (e.g., natural language text, code, etc.), images, video, computer aided design (CAD) assets, OMNIVERSE and/or METAVERSE file information (e.g., in USD format, such as OpenUSD), and/or the like, based on the context provided in input prompts or queries. These language models may be considered "large," in embodiments, based on the models being trained on massive datasets and having architectures with large number of learnable network parameters (weights and biases) - such as millions or billions of parameters. The LLMs/SLMs/VLMs/MMLMs/etc. may be implemented for summarizing textual data, analyzing and extracting insights from data (e.g., textual, image, video, etc.), and generating new text/image/video/etc. in user-specified styles, tones, and/or formats. The LLMs/SLMs/VLMs/MMLMs/etc. of the present disclosure may be used exclusively for text processing, in embodiments, whereas in other embodiments, multi-modal LLMs may be implemented to accept, understand, and/or generate text and/or other types of content like images, audio, 2D and/or 3D data (e.g., in USD formats), and/or video. For example, vision language models (VLMs), or more generally multi-modal language models (MMLMs), may be implemented to accept image, video, audio, textual, 3D design (e.g., CAD), and/or other inputs data types and/or to generate or output image, video, audio, textual, 3D design, and/or other output data types.

Various types of LLMs/SLMs/VLMs/MMLMs/etc. architectures may be implemented in various embodiments. For example, different architectures may be implemented that use different techniques for understanding and generating outputs - such as text, audio, video, image, 2D and/or 3D design or asset data, etc. In some embodiments, LLMs/SLMs/VLMs/MMLMs/etc. architectures such as recurrent neural networks (RNNs) or long short-term memory networks (LSTMs) may be used, while in other embodiments transformer architectures - such as those that rely on self-attention and/or cross-attention (e.g., between contextual data and textual data) mechanisms - may be used to understand and recognize relationships between words or tokens and/or contextual data (e.g., other text, video, image, design data, USD, etc.). One or more generative processing pipelines that include LLMs/SLMs/VLMs/MMLMs/etc. may also include one or more diffusion block(s) (e.g., denoisers). The LLMs/SLMs/VLMs/MMLMs/etc. of the present disclosure may include encoder and/or decoder block(s). For example, discriminative or encoder-only models like BERT (Bidirectional Encoder Representations from Transformers) may be implemented for tasks that involve language comprehension such as classification, sentiment analysis, question answering, and named entity recognition. As another example, generative or decoder-only models like GPT (Generative Pretrained Transformer) may be implemented for tasks that involve language and content generation such as text completion, story generation, and dialogue generation. LLMs/SLMs/VLMs/MMLMs/etc. that include both encoder and decoder components like T5 (Text-to-Text Transformer) may be implemented to understand and generate content, such as for translation and summarization. These examples are not intended to be limiting, and any architecture type - including but not limited to those described herein - may be implemented depending on the particular embodiment and the task(s) being performed using the LLMs/SLMs/VLMs/MMLMs/etc.

In various embodiments, the LLMs/SLMs/VLMs/MMLMs/etc. may be trained using unsupervised learning, in which an LLMs/SLMs/VLMs/MMLMs/etc. learns patterns from large amounts of unlabeled text/audio/video/image/design/USD/etc. data. Due to the extensive training, in embodiments, the models may not require task-specific or domain-specific training. LLMs/SLMs/VLMs/MMLMs/etc. that have undergone extensive pre-training on vast amounts of unlabeled data may be referred to as foundation models and may be adept at a variety of tasks like question-answering, summarization, filling in missing information, translation, image/video/design/USD/data generation. Some LLMs/SLMs/VLMs/MMLMs/etc. may be tailored for a specific use case using techniques like prompt tuning, fine-tuning, retrieval augmented generation (RAG), adding adapters (e.g., customized neural networks, and/or neural network layers, that tune or adjust prompts or tokens to bias the language model toward a particular task or domain), and/or using other fine-tuning or tailoring techniques that optimize the models for use on particular tasks and/or within particular domains.

In some embodiments, the LLMs/SLMs/VLMs/MMLMs/etc. of the present disclosure may be implemented using various model alignment techniques. For example, in some embodiments, guardrails may be implemented to identify improper or undesired inputs (e.g., prompts) and/or outputs of the models. In doing so, the system may use the guardrails and/or other model alignment techniques to either prevent a particular undesired input from being processed using the LLMs/SLMs/VLMs/MMLMs/etc., and/or preventing the output or presentation (e.g., display, audio output, etc.) of information generating using the LLMs/SLMs/VLMs/MMLMs/etc. In some embodiments, one or more additional models - or layers thereof - may be implemented to identify issues with inputs and/or outputs of the models. For example, these "safeguard" models may be trained to identify inputs and/or outputs that are "safe" or otherwise okay or desired and/or that are "unsafe" or are otherwise undesired for the particular application/implementation. As a result, the LLMs/SLMs/VLMs/MMLMs/etc.of the present disclosure may be less likely to output language/text/audio/video/design data/USD data/etc. that may be offensive, vulgar, improper, unsafe, out of domain, and/or otherwise undesired for the particular application/implementation.

In some embodiments, the LLMs/SLMs/VLMs/etc. may be configured to or capable of accessing or using one or more plug-ins, application programming interfaces (APIs), databases, data stores, repositories, etc. For example, for certain tasks or operations that the model is not ideally suited for, the model may have instructions (e.g., as a result of training, and/or based on instructions in a given prompt) to access one or more plug-ins (e.g., 3^{rd} party plugins) for help in processing the current input. In such an example, where at least part of a prompt is related to restaurants or weather, the model may access one or more restaurant or weather plug-ins (e.g., via one or more APIs) to retrieve the relevant information. As another example, where at least part of a response requires a mathematical computation, the model may access one or more math plug-ins or APIs for help in solving the problem(s), and may then use the response from the plug-in and/or API in the output from the model. This process may be repeated - e.g., recursively - for any number of iterations and using any number of plug-ins and/or APIs until a response to the input prompt can be generated that addresses each ask/question/request/process/operation/etc. As such, the model(s) may not only rely on its own knowledge from training on a large dataset(s), but also on the expertise or optimized nature of one or more external resources - such as APIs, plug-ins, and/or the like.

In some embodiments, multiple language models (e.g., LLMs/SLMs/VLMs/MMLMs/etc., multiple instances of the same language model, and/or multiple prompts provided to the same language model or instance of the same language model may be implemented, executed, or accessed (e.g., using one or more plug-ins, user interfaces, APIs, databases, data stores, repositories, etc.) to provide output responsive to the same query, or responsive to separate portions of a query. In at least one embodiment, multiple language models e.g., language models with different architectures, language models trained on different (e.g. updated) corpuses of data may be provided with the same input query and prompt (e.g., set of constraints, conditioners, etc.). In one or more embodiments, the language models may be different versions of the same foundation model. In one or more embodiments, at least one language model may be instantiated as multiple agents - e.g., more than one prompt may be provided to constrain, direct, or otherwise influence a style, a content, or a character, etc., of the output provided. In one or more example, non-limiting embodiments, the same language model may be asked to provide output corresponding to a different role, perspective, character, or having a different base of knowledge, etc. - as defined by a supplied prompt.

In any one of such embodiments, the output of two or more (e.g., each) language models, two or more versions of at least one language model, two or more instanced agents of at least one language model, and/or two more prompts provided to at least one language model may be further processed, e.g., aggregated, compared or filtered against, or used to determine (and provide) a consensus response. In one or more embodiments, the output from one language model - or version, instance, or agent - maybe be provided as input to another language model for further processing and/or validation. In one or more embodiments, a language model may be asked to generate or otherwise obtain an output with respect to an input source material, with the output being associated with the input source material. Such an association may include, for example, the generation of a caption or portion of text that is embedded (e.g., as metadata) with an input source text or image. In one or more embodiments, an output of a language model may be used to determine the validity of an input source material for further processing, or inclusion in a dataset. For example, a language model may be used to assess the presence (or absence) of a target word in a portion of text or an object in an image, with the text or image being annotated to note such presence (or lack thereof). Alternatively, the determination from the language model may be used to determine whether the source material should be included in a curated dataset, for example and without limitation.

FIG. 9A is a block diagram of an example generative language model system 900 suitable for use in implementing at least some embodiments of the present disclosure. In the example illustrated in FIG. 9A, the generative language model system 900 includes a retrieval augmented generation (RAG) component 992, an input processor 905, a tokenizer 910, an embedding component 920, plug-ins/APIs 995, and a generative language model (LM) 930 (which may include an LLM, a VLM, a multi-modal LM, etc.).

At a high level, the input processor 905 may receive an input 901 comprising text and/or other types of input data (e.g., audio data, video data, image data, sensor data (e.g., LiDAR, RADAR, ultrasonic, etc.), 3D design data, CAD data, universal scene descriptor (USD) data - such as OpenUSD, etc.), depending on the architecture of the generative LM 930 (e.g., LLM/VLM/MMLM/etc.). In some embodiments, the input 901 includes plain text in the form of one or more sentences, paragraphs, and/or documents. Additionally or alternatively, the input 901 may include numerical sequences, precomputed embeddings (e.g., word or sentence embeddings), and/or structured data (e.g., in tabular formats, JSON, or XML). In some implementations in which the generative LM 930 is capable of processing multi-modal inputs, the input 901 may combine text (or may omit text) with image data, audio data, video data, design data, USD data, and/or other types of input data, such as but not limited to those described herein. Taking raw input text as an example, the input processor 905 may prepare raw input text in various ways. For example, the input processor 905 may perform various types of text filtering to remove noise (e.g., special characters, punctuation, HTML tags, stopwords, portions of an image(s), portions of audio, etc.) from relevant textual content. In an example involving stopwords (common words that tend to carry little semantic meaning), the input processor 905 may remove stopwords to reduce noise and focus the generative LM 930 on more meaningful content. The input processor 905 may apply text normalization, for example, by converting all characters to lowercase, removing accents, and/or or handling special cases like contractions or abbreviations to ensure consistency. These are just a few examples, and other types of input processing may be applied.

In some embodiments, a RAG component 992 (which may include one or more RAG models, and/or may be performed using the generative LM 930 itself) may be used to retrieve additional information to be used as part of the input 901 or prompt. RAG may be used to enhance the input to the LLM/VLM/MMLM/etc. with external knowledge, so that answers to specific questions or queries or requests are more relevant - such as in a case where specific knowledge is required. The RAG component 992 may fetch this additional information (e.g., grounding information, such as grounding text/image/video/audio/USD/CAD/etc.) from one or more external sources, which can then be fed to the LLM/SLM/VLM/MMLM/etc. along with the prompt to improve accuracy of the responses or outputs of the model.

For example, in some embodiments, the input 901 may be generated using the query or input to the model (e.g., a question, a request, etc.) in addition to data retrieved using the RAG component 992. In some embodiments, the input processor 905 may analyze the input 901 and communicate with the RAG component 992 (or the RAG component 992 may be part of the input processor 905, in embodiments) in order to identify relevant text and/or other data to provide to the generative LM 930 as additional context or sources of information from which to identify the response, answer, or output 990, generally. For example, where the input indicates that the user is interested in a desired tire pressure for a particular make and model of vehicle, the RAG component 992 may retrieve - using a RAG model performing a vector search in an embedding space, for example - the tire pressure information or the text corresponding thereto from a digital (embedded) version of the user manual for that particular vehicle make and model. Similarly, where a user revisits a chatbot related to a particular product offering or service, the RAG component 992 may retrieve a prior stored conversation history - or at least a summary thereof - and include the prior conversation history along with the current ask/request as part of the input 901 to the generative LM 930.

The RAG component 992 may use various RAG techniques. For example, naive RAG may be used where documents are indexed, chunked, and applied to an embedding model to generate embeddings corresponding to the chunks. A user query may also be applied to the embedding model and/or another embedding model of the RAG component 992 and the embeddings of the chunks along with the embeddings of the query may be compared to identify the most similar/related embeddings to the query, which may be supplied to the generative LM 930 to generate an output.

In some embodiments, more advanced RAG techniques may be used. For example, prior to passing chunks to the embedding model, the chunks may undergo pre-retrieval processes (e.g., routing, rewriting, metadata analysis, expansion, etc.). In addition, prior to generating the final embeddings, post-retrieval processes (e.g., re-ranking, prompt compression, etc.) may be performed on the outputs of the embedding model prior to final embeddings being used as comparison to an input query.

As a further example, modular RAG techniques may be used, such as those that are similar to naïve and/or advanced RAG, but also include features such as hybrid search, recursive retrieval and query engines, StepBack approaches, sub-queries, and hypothetical document embedding.

As another example, Graph RAG may use knowledge graphs as a source of context or factual information. Graph RAG may be implemented using a graph database as a source of contextual information sent to the LLM/VLM/MMLM/etc. Rather than (or in addition to) providing the model with chunks of data extracted from larger sized documents - which may result in a lack of context, factual correctness, language accuracy, etc. - graph RAG may also provide structured entity information to the LLM/VLM/MMLM/etc. by combining the structured entity textual description with its many properties and relationships, allowing for deeper insights by the model. When implementing graph RAG, the systems and methods described herein use a graph as a content store and extract relevant chunks of documents and ask the LLM/VLM/MMLM/etc. to answer using them. The knowledge graph, in such embodiments, may contain relevant textual content and metadata about the knowledge graph as well as be integrated with a vector database. In some embodiments, the graph RAG may use a graph as a subject matter expert, where descriptions of concepts and entities relevant to a query/prompt may be extracted and passed to the model as semantic context. These descriptions may include relationships between the concepts. In other examples, the graph may be used as a database, where part of a query/prompt may be mapped to a graph query, the graph query may be executed, and the LLM/VLM/MMLM/etc. may summarize the results. In such an example, the graph may store relevant factual information, and a query (natural language query) to graph query tool (NL-to-Graph-query tool) and entity linking may be used. In some embodiments, graph RAG (e.g., using a graph database) may be combined with standard (e.g., vector database) RAG, and/or other RAG types, to benefit from multiple approaches.

In any embodiments, the RAG component 992 may implement a plugin, API, user interface, and/or other functionality to perform RAG. For example, a graph RAG plug-in may be used by the LLM/VLM/MMLM/etc. to run queries against the knowledge graph to extract relevant information for feeding to the model, and a standard or vector RAG plug-in may be used to run queries against a vector database. For example, the graph database may interact with a plug-in's REST interface such that the graph database is decoupled from the vector database and/or the embeddings models.

The tokenizer 910 may segment the (e.g., processed) text data into smaller units (tokens) for subsequent analysis and processing. The tokens may represent individual words, subwords, characters, portions of audio/video/image/etc., depending on the implementation. Word-based tokenization divides the text into individual words, treating each word as a separate token. Subword tokenization breaks down words into smaller meaningful units (e.g., prefixes, suffixes, stems), enabling the generative LM 930 to understand morphological variations and handle out-of-vocabulary words more effectively. Character-based tokenization represents each character as a separate token, enabling the generative LM 930 to process text at a fine-grained level. The choice of tokenization strategy may depend on factors such as the language being processed, the task at hand, and/or characteristics of the training dataset. As such, the tokenizer 910 may convert the (e.g., processed) text into a structured format according to tokenization schema being implemented in the particular embodiment.

The embedding component 920 may use any known embedding technique to transform discrete tokens into (e.g., dense, continuous vector) representations of semantic meaning. For example, the embedding component 920 may use pre-trained word embeddings (e.g., Word2Vec, GloVe, or FastText), one-hot encoding, Term Frequency-Inverse Document Frequency (TF-IDF) encoding, one or more embedding layers of a neural network, and/or otherwise.

In some implementations in which the input 901 includes image data/video data/etc., the input processor 901 may resize the data to a standard size compatible with format of a corresponding input channel and/or may normalize pixel values to a common range (e.g., 0 to 1) to ensure a consistent representation, and the embedding component 920 may encode the image data using any known technique (e.g., using one or more convolutional neural networks (CNNs) to extract visual features). In some implementations in which the input 901 includes audio data, the input processor 901 may resample an audio file to a consistent sampling rate for uniform processing, and the embedding component 920 may use any known technique to extract and encode audio features - such as in the form of a spectrogram (e.g., a mel-spectrogram). In some implementations in which the input 901 includes video data, the input processor 901 may extract frames or apply resizing to extracted frames, and the embedding component 920 may extract features such as optical flow embeddings or video embeddings and/or may encode temporal information or sequences of frames. In some implementations in which the input 901 includes multi-modal data, the embedding component 920 may fuse representations of the different types of data (e.g., text, image, audio, USD, video, design, etc.) using techniques like early fusion (concatenation), late fusion (sequential processing), attention-based fusion (e.g., self-attention, cross-attention), etc.

The generative LM 930 and/or other components of the generative LM system 900 may use different types of neural network architectures depending on the implementation. For example, transformer-based architectures such as those used in models like GPT may be implemented, and may include self-attention mechanisms that weigh the importance of different words or tokens in the input sequence and/or feedforward networks that process the output of the self-attention layers, applying non-linear transformations to the input representations and extracting higher-level features. Some non-limiting example architectures include transformers (e.g., encoder-decoder, decoder only, multi-modal), RNNs, LSTMs, fusion models, diffusion models, cross-modal embedding models that learn joint embedding spaces, graph neural networks (GNNs), hybrid architectures combining different types of architectures adversarial networks like generative adversarial networks or GANs or adversarial autoencoders (AAEs) for joint distribution learning, and others. As such, depending on the implementation and architecture, the embedding component 920 may apply an encoded representation of the input 901 to the generative LM 930, and the generative LM 930 may process the encoded representation of the input 901 to generate an output 990, which may include responsive text and/or other types of data.

As described herein, in some embodiments, the generative LM 930 may be configured to access or use - or capable of accessing or using - plug-ins/APIs 995 (which may include one or more plug-ins, application programming interfaces (APIs), databases, data stores, repositories, etc.). For example, for certain tasks or operations that the generative LM 930 is not ideally suited for, the model may have instructions (e.g., as a result of training, and/or based on instructions in a given prompt, such as those retrieved using the RAG component 992) to access one or more plug-ins/APIs 995 (e.g., 3^{rd} party plugins) for help in processing the current input. In such an example, where at least part of a prompt is related to restaurants or weather, the model may access one or more restaurant or weather plug-ins (e.g., via one or more APIs), send at least a portion of the prompt related to the particular plug-in/API 995 to the plug-in/API 995, the plug-in/API 995 may process the information and return an answer to the generative LM 930, and the generative LM 930 may use the response to generate the output 990. This process may be repeated - e.g., recursively - for any number of iterations and using any number of plug-ins/APIs 995 until an output 990 that addresses each ask/question/request/process/operation/etc. from the input 901 can be generated. As such, the model(s) may not only rely on its own knowledge from training on a large dataset(s) and/or from data retrieved using the RAG component 992, but also on the expertise or optimized nature of one or more external resources - such as the plug-ins/APIs 995.

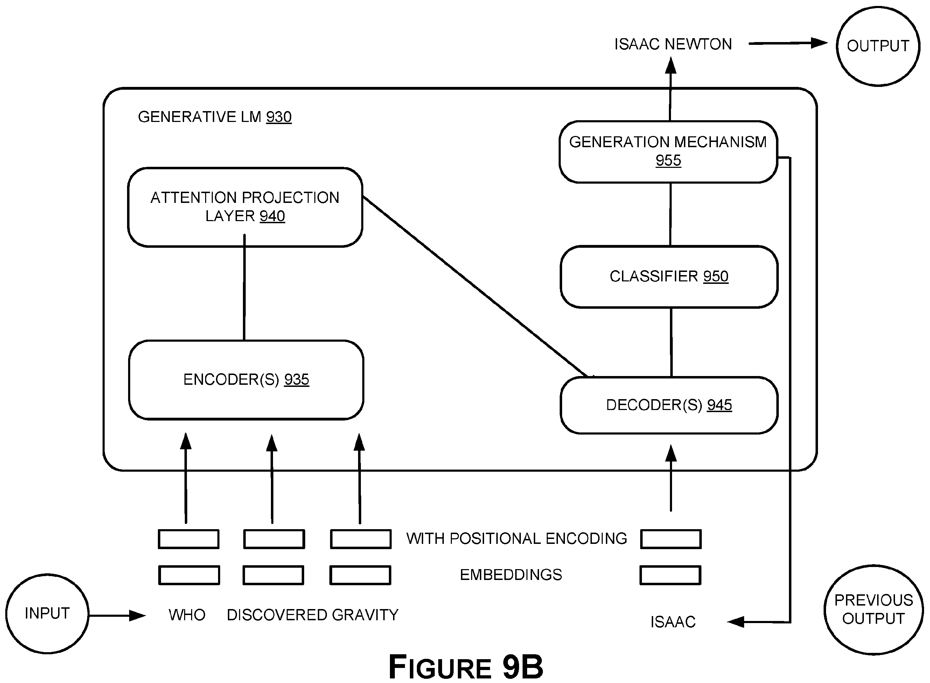

FIG. 9B is a block diagram of an example implementation in which the generative LM 930 includes a transformer encoder-decoder. For example, assume input text such as "Who discovered gravity" is tokenized (e.g., by the tokenizer910 of FIG. 9A) into tokens such as words, and each token is encoded (e.g., by the embedding component 920 of FIG. 99A) into a corresponding embedding (e.g., of size 512). Since these token embeddings typically do not represent the position of the token in the input sequence, any known technique may be used to add a positional encoding to each token embedding to encode the sequential relationships and context of the tokens in the input sequence. As such, the (e.g., resulting) embeddings may be applied to one or more encoder(s) 935 of the generative LM 930.

In an example implementation, the encoder(s) 935 forms an encoder stack, where each encoder includes a self-attention layer and a feedforward network. In an example transformer architecture, each token (e.g., word) flows through a separate path. As such, each encoder may accept a sequence of vectors, passing each vector through the self-attention layer, then the feedforward network, and then upwards to the next encoder in the stack. Any known self-attention technique may be used. For example, to calculate a self-attention score for each token (word), a query vector, a key vector, and a value vector may be created for each token, a self-attention score may be calculated for pairs of tokens by taking the dot product of the query vector with the corresponding key vectors, normalizing the resulting scores, multiplying by corresponding value vectors, and summing weighted value vectors. The encoder may apply multi-headed attention in which the attention mechanism is applied multiple times in parallel with different learned weight matrices. Any number of encoders may be cascaded to generate a context vector encoding the input. An attention projection layer 940 may convert the context vector into attention vectors (keys and values) for the decoder(s) 945.

In an example implementation, the decoder(s) 945 form a decoder stack, where each decoder includes a self-attention layer, an encoder-decoder self-attention layer that uses the attention vectors (keys and values) from the encoder to focus on relevant parts of the input sequence, and a feedforward network. As with the encoder(s) 935, in an example transformer architecture, each token (e.g., word) flows through a separate path in the decoder(s) 945. During a first pass, the decoder(s) 945, a classifier 950, and a generation mechanism 955 may generate a first token, and the generation mechanism 955 may apply the generated token as an input during a second pass. The process may repeat in a loop, successively generating and adding tokens (e.g., words) to the output from the preceding pass and applying the token embeddings of the composite sequence with positional encodings as an input to the decoder(s) 945 during a subsequent pass, sequentially generating one token at a time (known as auto-regression) until predicting a symbol or token that represents the end of the response. Within each decoder, the self-attention layer is typically constrained to attend only to preceding positions in the output sequence by applying a masking technique (e.g., setting future positions to negative infinity) before the softmax operation. In an example implementation, the encoder-decoder attention layer operates similarly to the (e.g., multi-headed) self-attention in the encoder(s) 935, except that it creates its queries from the layer below it and takes the keys and values (e.g., matrix) from the output of the encoder(s) 935.

As such, the decoder(s) 945 may output some decoded (e.g., vector) representation of the input being applied during a particular pass. The classifier 950 may include a multi-class classifier comprising one or more neural network layers that project the decoded (e.g., vector) representation into a corresponding dimensionality (e.g., one dimension for each supported word or token in the output vocabulary) and a softmax operation that converts logits to probabilities. As such, the generation mechanism 955 may select or sample a word or token based on a corresponding predicted probability (e.g., select the word with the highest predicted probability) and append it to the output from a previous pass, generating each word or token sequentially. The generation mechanism 955 may repeat the process, triggering successive decoder inputs and corresponding predictions until selecting or sampling a symbol or token that represents the end of the response, at which point, the generation mechanism 955 may output the generated response.

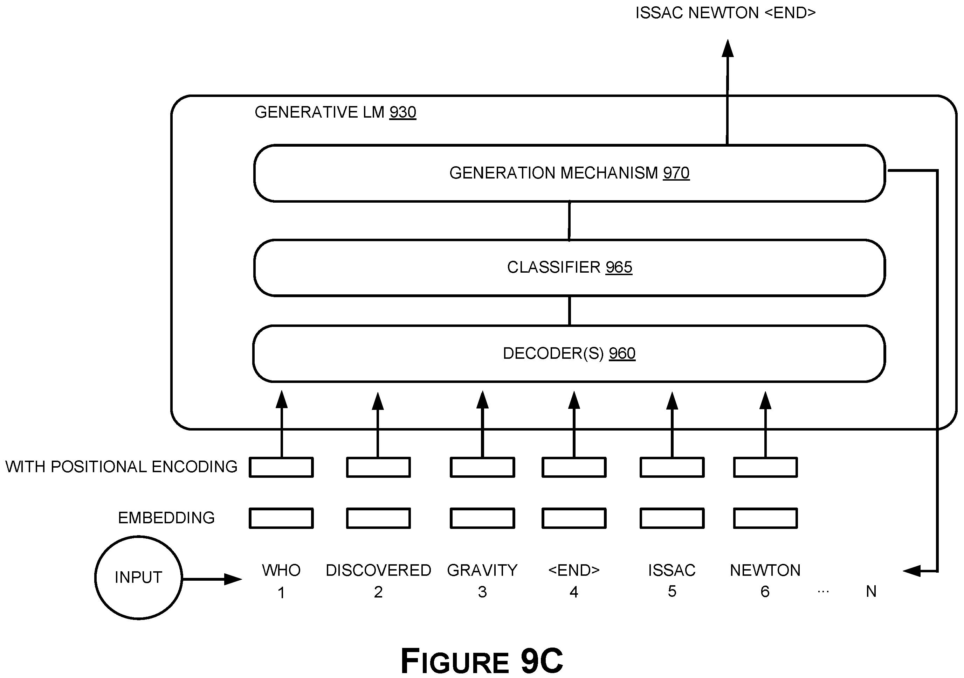

FIG. 9C is a block diagram of an example implementation in which the generative LM 930 includes a decoder-only transformer architecture. For example, the decoder(s) 960 of FIG. 9C may operate similarly as the decoder(s) 945 of FIG. 9B except each of the decoder(s) 960 of FIG. 9C omits the encoder-decoder self-attention layer (since there is no encoder in this implementation). As such, the decoder(s) 960 may form a decoder stack, where each decoder includes a self-attention layer and a feedforward network. Furthermore, instead of encoding the input sequence, a symbol or token representing the end of the input sequence (or the beginning of the output sequence) may be appended to the input sequence, and the resulting sequence (e.g., corresponding embeddings with positional encodings) may be applied to the decoder(s) 960. As with the decoder(s) 945 of FIG. 9B, each token (e.g., word) may flow through a separate path in the decoder(s) 960, and the decoder(s) 960, a classifier 965, and a generation mechanism 970 may use auto-regression to sequentially generate one token at a time until predicting a symbol or token that represents the end of the response. The classifier 965 and the generation mechanism 970 may operate similarly as the classifier 950 and the generation mechanism 955 of FIG. 9B, with the generation mechanism 970 selecting or sampling each successive output token based on a corresponding predicted probability and appending it to the output from a previous pass, generating each token sequentially until selecting or sampling a symbol or token that represents the end of the response. These and other architectures described herein are meant simply as examples, and other suitable architectures may be implemented within the scope of the present disclosure.

The disclosure may be described in the general context of computer code or machine-useable instructions, including computer-executable instructions such as program modules, being executed by a computer or other machine, such as a personal data assistant or other handheld device. Generally, program modules including routines, programs, objects, components, data structures, etc., refer to code that perform particular tasks or implement particular abstract data types. The disclosure may be practiced in a variety of system configurations, including hand-held devices, consumer electronics, general-purpose computers, more specialty computing devices, etc. The disclosure may also be practiced in distributed computing environments where tasks are performed by remote-processing devices that are linked through a communications network.

As used herein, a recitation of "and/or" with respect to two or more elements should be interpreted to mean only one element, or a combination of elements. For example, "element A, element B, and/or element C" may include only element A, only element B, only element C, element A and element B, element A and element C, element B and element C, or elements A, B, and C. In addition, "at least one of element A or element B" may include at least one of element A, at least one of element B, or at least one of element A and at least one of element B. Further, "at least one of element A and element B" may include at least one of element A, at least one of element B, or at least one of element A and at least one of element B.

The subject matter of the present disclosure is described with specificity herein to meet statutory requirements. However, the description itself is not intended to limit the scope of this disclosure. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

### EXAMPLE PARAGRAPHS

A. A method comprising: generating, using one or more first encoders of a machine learning model and based at least on first audio data representing speech of a target speaker, a voice profile associated with the target speaker; determining, using one or more second encoders of the machine learning model and based at least on the voice profile and second audio data representing a multi-speaker dialogue, one or more portions of the multi-speaker dialogue that correspond to the target speaker; and generating, using one or more decoders of the machine learning model, output data representing text or speech corresponding to one or more translations of the one or more portions of the multi-speaker dialogue from a first language into one or more second languages.
B. The method of paragraph A, further comprising: generating, using the one or more second encoders of the one or more machine learning models, one or more feature representations encoding the one or more utterances that correspond to the target speaker, wherein the generating of the output data using the one or more decoders of the one or more machine learning models is based at least on applying the one or more feature representations as input to the one or more decoders.
C. The method of any one of paragraphs A-B, wherein the voice profile includes one or more speaker embeddings representing one or more vocal features associated with the target speaker.
D. The method of any one of paragraphs A-C, further comprising: applying, to the one or more decoders, input data indicating the one or more second languages to translate the one or more utterances into, wherein the generating of the output data is further based at least on the input data.
E. The method of any one of paragraphs A-D, further comprising: determining, based at least on one or more language identification models processing at least a portion of the second audio data, a first language associated with the one or more portions of the multi-speaker dialogue, wherein the generating of the output data is based at least on applying, to the one or more decoders, data indicating the first language associated with the one or more portions of the multi-speaker dialogue.
F. The method of any one of paragraphs A-E, wherein the determining of the one or more portions of the multi-speaker dialogue comprises filtering, using the voice profile, the second audio data to identify the one or more portions of the multi-speaker dialogue corresponding to the target speaker.
G. A system comprising: one or more processors to: obtain audio data representing a multi-speaker dialogue; identify, using one or more models and based at least on the audio data and one or more embeddings identifying a target speaker, speech in the multi-speaker dialogue that corresponds to the target speaker; generate, using the one or more models, output data corresponding to one or more translations of the speech from a first language spoken by the target speaker into one or more second languages; and cause at least one of visual or audible presentation of the output data.
H. The system of paragraph G, wherein the speech in the multi-speaker dialogue that corresponds to the target speaker is identified using one or more automatic speech translation (AST) encoders of the one or more models.
I. The system of any one of paragraphs G-H, wherein the output data corresponding to the one or more translations of the speech is generated using one or more AST decoders of the one or more models.
J. The system of any one of paragraphs G-I, the one or more processors further to: generate, using one or more encoders of the one or more models, the one or more embeddings identifying the target speaker; and apply the one or more embeddings as input to one or more decoders of the one or more models, wherein the output data is generated based at least on the one or more decoders using the one or more embeddings to identify the speech in the multi-speaker dialogue that corresponds to the target speaker.
K. The system of any one of paragraphs G-J, wherein the one or more models generate additional speech corresponding to one or more additional target speakers in parallel with the speech that corresponds to the target speaker.
L. The system of any one of paragraphs G-K, wherein the multi-speaker dialogue includes the speech corresponding to the target speaker and second speech corresponding to one or more second speakers that are different from the target speaker.
M. The system of any one of paragraphs G-L, wherein the one or more embeddings represent one or more vocal features associated with the target speaker.
N. The system of any one of paragraphs G-M, the one or more processors further to: apply, to the one or more models, data indicating the one or more second languages to translate the speech into, wherein the generation of the output data is further based at least on the data indicating the one or more second languages.
O. The system of any one of paragraphs G-N, the one or more processors further to: determine, using one or more second models and based at least on at least a portion of the audio data, the first language associated with the speech that corresponds to the target speaker, wherein the generation of the output data is based at least on applying, to the one or more models, data indicating the first language associated with the speech.
P. The system of any one of paragraphs G-O, the one or more processors further to: identify, using one or more second models and based at least on one or more second embeddings associated with one or more additional target speakers, second speech in the multi-speaker dialogue that corresponds to the one or more additional target speakers; and generate, using the one or more second models, second output data corresponding to one or more second translations of the second speech to the one or more second languages or one or more third languages.
Q. The system of any one of paragraphs G-P, wherein the system is comprised in at least one of: a control system for an autonomous or semi-autonomous machine; a perception system for an autonomous or semi-autonomous machine; a system for performing one or more simulation operations; a system for performing one or more digital twin operations; a system for performing light transport simulation; a system for performing collaborative content creation for 3D assets; a system for performing one or more deep learning operations; a system implemented using an edge device; a system implemented using a robot; a system for performing one or more generative AI operations; a system for performing operations using a large language model; a system for performing operations using one or more vision language models (VLMs); a system for performing operations using one or more multi-modal language models; a system for performing one or more conversational AI operations; a system for generating synthetic data; a system for presenting at least one of virtual reality content, augmented reality content, or mixed reality content; a system incorporating one or more virtual machines (VMs); a system implemented at least partially in a data center; or a system implemented at least partially using cloud computing resources.
R. One or more processors comprising: processing circuitry to generate a translation, from a first language to one or more second languages, of speech of a target speaker extracted from a multi-speaker dialogue, the translation performed based at least on a machine learning model processing (i) audio data corresponding to the multi-speaker dialogue, (ii) an embedding identifying the target speaker, and (iii) one or more indications of the first language and the one or more second languages.
S. The one or more processors of paragraph R, wherein the machine learning model is jointly trained to perform target speaker identification and translation of speech corresponding to target speakers.
T. A method comprising: generating, using a first encoder of a machine learning model and considering first audio data representing speech of a first speaker in a first language, a voice profile associated with the first speaker; determining, using a second encoder of the machine learning model and considering the voice profile and second audio data representing a multi-speaker dialogue, an utterance in the multi-speaker dialogue that corresponds to the first speaker; and generating, using a decoder of the machine learning model, output data representing a translation of the utterance from the first language into a second language.

## Claims

1. A method comprising:
generating, using one or more first encoders of a machine learning model and based at least on first audio data representing speech of a target speaker, a voice profile associated with the target speaker;
determining, using one or more second encoders of the machine learning model and based at least on the voice profile and second audio data representing a multi-speaker dialogue, one or more portions of the multi-speaker dialogue that correspond to the target speaker; and
generating, using one or more decoders of the machine learning model, output data representing text or speech corresponding to one or more translations of the one or more portions of the multi-speaker dialogue from a first language into one or more second languages.

2. The method of claim 1, further comprising:
generating, using the one or more second encoders of the one or more machine learning models, one or more feature representations encoding the one or more utterances that correspond to the target speaker,
wherein the generating of the output data using the one or more decoders of the one or more machine learning models is based at least on applying the one or more feature representations as input to the one or more decoders.

3. The method of claim 1 or 2, wherein the voice profile includes one or more speaker embeddings representing one or more vocal features associated with the target speaker.

4. The method of any preceding claim, further comprising:
applying, to the one or more decoders, input data indicating the one or more second languages to translate the one or more utterances into,
wherein the generating of the output data is further based at least on the input data.

5. The method of any preceding claim, further comprising:
determining, based at least on one or more language identification models processing at least a portion of the second audio data, a first language associated with the one or more portions of the multi-speaker dialogue,
wherein the generating of the output data is based at least on applying, to the one or more decoders, data indicating the first language associated with the one or more portions of the multi-speaker dialogue.

6. The method of any preceding claim, wherein the determining of the one or more portions of the multi-speaker dialogue comprises filtering, using the voice profile, the second audio data to identify the one or more portions of the multi-speaker dialogue corresponding to the target speaker.

7. A system comprising:
one or more processors to:
obtain audio data representing a multi-speaker dialogue;
identify, using one or more models and based at least on the audio data and one or more embeddings identifying a target speaker, speech in the multi-speaker dialogue that corresponds to the target speaker;
generate, using the one or more models, output data corresponding to one or more translations of the speech from a first language spoken by the target speaker into one or more second languages; and
cause at least one of visual or audible presentation of the output data.

8. The system of claim 7, wherein the speech in the multi-speaker dialogue that corresponds to the target speaker is identified using one or more automatic speech translation (AST) encoders of the one or more models.

9. The system of claim 8, wherein the output data corresponding to the one or more translations of the speech is generated using one or more AST decoders of the one or more models.

10. The system of any of claims 7 to 9, the one or more processors further to:
generate, using one or more encoders of the one or more models, the one or more embeddings identifying the target speaker; and
apply the one or more embeddings as input to one or more decoders of the one or more models,
wherein the output data is generated based at least on the one or more decoders using the one or more embeddings to identify the speech in the multi-speaker dialogue that corresponds to the target speaker.

11. The system of any of claims 7 to 10, wherein the one or more models generate additional speech corresponding to one or more additional target speakers in parallel with the speech that corresponds to the target speaker.

12. The system of any of claims 7 to 11, wherein the multi-speaker dialogue includes the speech corresponding to the target speaker and second speech corresponding to one or more second speakers that are different from the target speaker.

13. The system of any of claims 7 to 12, wherein the one or more embeddings represent one or more vocal features associated with the target speaker.

14. The system of any of claims 7 to 13, the one or more processors further to at least one of the following:
apply, to the one or more models, data indicating the one or more second languages to translate the speech into, wherein the generation of the output data is further based at least on the data indicating the one or more second languages;
determine, using one or more second models and based at least on at least a portion of the audio data, the first language associated with the speech that corresponds to the target speaker,
wherein the generation of the output data is based at least on applying, to the one or more models, data indicating the first language associated with the speech.

15. The system of any of claims 7 to 14, the one or more processors further to
identify, using one or more second models and based at least on one or more second embeddings associated with one or more additional target speakers, second speech in the multi-speaker dialogue that corresponds to the one or more additional target speakers; and
generate, using the one or more second models, second output data corresponding to one or more second translations of the second speech to the one or more second languages or one or more third languages.

16. One or more processors comprising:
processing circuitry to generate a translation, from a first language to one or more second languages, of speech of a target speaker extracted from a multi-speaker dialogue, the translation performed based at least on a machine learning model processing (i) audio data corresponding to the multi-speaker dialogue, (ii) an embedding identifying the target speaker, and (iii) one or more indications of the first language and the one or more second languages.

17. The one or more processors of claim 16, wherein machine learning model is jointly trained to perform target speaker identification and translation of speech corresponding to target speakers.

18. A method comprising:
generating, using a first encoder of a machine learning model and considering first audio data representing speech of a first speaker in a first language, a voice profile associated with the first speaker;
determining, using a second encoder of the machine learning model and considering the voice profile and second audio data representing a multi-speaker dialogue, an utterance in the multi-speaker dialogue that corresponds to the first speaker; and
generating, using a decoder of the machine learning model, output data representing a translation of the utterance from the first language into a second language.
